(19) Europäisches Patentamt
European Patent Office
Office européen des brevets

(11) **EP 4 761 164 A1**

(12) **EUROPEAN PATENT APPLICATION**
published in accordance with Art. 153(4) EPC

(43) Date of publication:
**17.06.2026 Bulletin 2026/25**

(21) Application number: 24853289.7

(22) Date of filing: **20.05.2024**

(51) International Patent Classification (IPC):
*H04L 5/00* (2006.01)

(86) International application number:
**PCT/CN2024/094289**

(87) International publication number:
**WO 2025/035874 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.08.2023 CN 202311018885**

(71) Applicant: ZTE Corporation
**Shenzhen, Guangdong 518057 (CN)**

(72) Inventors:
- **LIU, Kun**
  **Shenzhen, Guangdong 518057 (CN)**
- **GUO, Qiujin**
  **Shenzhen, Guangdong 518057 (CN)**
- **DAI, Bo**
  **Shenzhen, Guangdong 518057 (CN)**
- **YANG, Weiwei**
  **Shenzhen, Guangdong 518057 (CN)**
- **HU, Youjun**
  **Shenzhen, Guangdong 518057 (CN)**
- **CHEN, Mengzhu**
  **Shenzhen, Guangdong 518057 (CN)**
- **XU, Jun**
  **Shenzhen, Guangdong 518057 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **SIGNAL SENDING METHOD, SIGNAL RECEIVING METHOD, COMMUNICATION APPARATUS AND STORAGE MEDIUM**

(57)    A signal sending method, a signal receiving method, a communication apparatus and a storage medium. The signal sending method comprises: sending a first signal, wherein the first signal carries first data information, and the first signal occupies at least one time-domain symbol in time domain.

First communication node

Second communication node

S101, A first signal, where the first signal carries first data information, and the first signal occupies at least one time-domain symbol in time domain

FIG. 3

**Description**

The present disclosure claims a priority to Chinese Patent Application No. 202311018885.3, and filed on August 11, 2023, the entire content of which is incorporated into the present application by reference.

TECHNICAL FIELD

The present disclosure relates to the field of communication network technologies, and in particular, to a signal sending method, a signal receiving method, a communication apparatus, and a storage medium.

BACKGROUND

For the 5th generation mobile communication technology (5th-Generation Mobile Communication Technology, 5G) system, in addition to delay, reliability and availability, the energy efficiency of the terminal device or the user equipment (UE) is also crucial. Currently, the 5G device may need to be charged weekly or daily depending on individual usage time. Typically, the 5G device consumes tens of milliwatts of power in a radio resource control (RRC) idle state/inactive state, and consumes hundreds of milliwatts of power in an RRC connected state. Therefore, extending the battery life is a necessity condition for improving the energy efficiency and improving the user experience.

The power consumption depends on a length of a configured wake-up cycle, such as a paging cycle. Therefore, in order to satisfy the requirements of battery life, a low-power wake-up (LP-WUS) mechanism is introduced. This means that the user uses a separate receiver to receive the LP-WUS signal and wakes up the main radio equipment to perform data transmission and reception. When the UE does not detect the LP-WUS signal, the main receiver is in a deep sleep state, which further reduces the power consumption of the terminal.

SUMMARY

In an aspect, the embodiments of the present disclosure provide a signal sending method. The signal sending method includes:
sending a first signal, where the first signal carries first data information, and the first signal occupies at least one time-domain symbol in time domain.

In another aspect, the embodiments of the present disclosure provide a signal receiving method. The signal receiving method includes:
receiving a first signal, where the first signal carries first data information, and the first signal occupies at least one time-domain symbol in time domain.

In another aspect, the embodiments of the present disclosure provide a signal sending apparatus. The signal sending device includes: a sending module;
the sending module is configured to send a first signal, where the first signal carries first data information, and the first signal occupies at least one time-domain symbol in time domain.

In another aspect, the embodiments of the present disclosure provide a signal receiving apparatus. The signal receiving device includes: a receiving module;
the receiving module is configured to receive a first signal, where the first signal carries first data information, and the first signal occupies at least one time-domain symbol in time domain.

In yet another aspect, the embodiments of the present disclosure provide a communication apparatus. The communication apparatus includes: a memory and a processor; the memory and the processor are coupled with each other; the memory is configured to store a computer program; the processor, when executing the computer program, implements the signal sending method and the signal receiving method according to any one of the above embodiments.

In yet another aspect, the embodiments of the present disclosure provide a computer readable storage medium. The computer readable storage medium has stored computer program instructions thereon, and the computer program instructions, when executed by a processor, implement the signal sending method and the signal receiving method according to any one of the above embodiments.

In yet another aspect, the embodiments of the present disclosure provide a computer program product. The computer program product includes computer program instructions, and the computer program instructions, when executed by a processor, implement the signal sending method and the signal receiving method according to any one of the above embodiments.

BRIEF DESCRIPTION OF THE DRAWINGS

In order to describe technical solutions in the present disclosure more clearly, the drawings that some embodiments of the present disclosure need to use, will be briefly introduced below. Obviously, the drawings in the following description are merely drawings of some embodiments of the present disclosure, and other drawings may be obtained according to these drawings for the ordinary skilled in the art.

FIG. 1 is a schematic diagram of a network architecture of a mobile communication network according to some embodiments.

FIG. 2 is a data processing flow diagram of a sending end and a receiving end according to some embodiments.

FIG. 3 is a flow chart of a signal sending method and a signal receiving method according to some embodiments.

FIG. 4 is a schematic diagram of a time-frequency resource according to some embodiments.

FIG. 5 is a schematic diagram of another time-frequency resource according to some embodiments.

FIG. 6 is a schematic diagram of yet another time-frequency resource according to some embodiments.

FIG. 7 is a schematic diagram of a data processing procedure according to some embodiments.

FIG. 8 is a schematic diagram of a time-domain symbol according to some embodiments.

FIG. 9 is a schematic diagram of yet another time-frequency resource according to some embodiments.

FIG. 10 is a schematic diagram of yet another time-frequency resource according to some embodiments.

FIG. 11 is a schematic diagram of yet another time-frequency resource according to some embodiments.

FIG. 12 is a schematic diagram of yet another time-frequency resource according to some embodiments.

FIG. 13 is a schematic diagram of yet another time-frequency resource according to some embodiments.

FIG. 14 is a structural schematic diagram of a signal sending apparatus according to some embodiments.

FIG. 15 is a structural schematic diagram of a signal receiving apparatus according to some embodiments.

FIG. 16 is a structural schematic diagram of a communication apparatus according to some embodiments.

## DETAILED DESCRIPTION

The technical solutions in the present disclosure will be described clearly and completely below in conjunction with the drawings in the present disclosure. Obviously, the described embodiments are merely some but not all of the embodiments of the present disclosure. Based on the embodiments in the present disclosure, all other embodiments obtained by those ordinary skilled without creative efforts shall fall within the protection scope of the present disclosure.

It should be noted that in the present disclosure, the expressions such as "exemplary/exemplarily" or "for example" are used to present an example, illustration, or explanation. Any embodiment or design scheme described with "exemplary/exemplarily" or "for example" in the present disclosure should not be construed as preferred or advantageous over other embodiments or design schemes. Rather, the usage of the expressions, such as "exemplary/exemplarily" or "for example", is intended to present relevant concepts in a detailed manner.

Hereinafter, the terms "first", "second", etc., are used for descriptive purposes only, but are not to be construed as indicating or implying relative importance or implicitly indicating a number of indicated technical features. Thus, features defined with "first" or "second", etc., may explicitly or implicitly include one or more of the features.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more.

As described in the background art, to satisfy the requirements for battery life, an ultra-low power wake-up (LP-WUS) mechanism is introduced, i.e., a user uses a dedicated receiver to receive an LP-WUS signal and wakes up a main radio equipment through the LP-WUS signal for data transmission and reception; when no LP-WUS signal is detected by the UE, a main receiver is in a deep sleep state, which further reduces the power consumption of the terminal by this means.

However, the ultra-low power wake-up (LP-WUS) mechanism is used, which affects the detection performance of LP-WUS signals. Meanwhile, the occurrence of frequency offset will exert a significant further impact on the detection of LP-WUS signals. Therefore, how to improve the detection performance of the LP-WUS signals while reducing the impact of frequency domain offset on the detection performance in a process of receiving LP-WUS signals is an urgent problem to be solved.

To address the above technical problem, the embodiments of the present disclosure provide a signal sending method and a signal receiving method, the idea of which is as that: a signal sending end sends a first signal and carries first data information in the first signal; the first signal may occupy at least one time-domain symbol; correspondingly, a signal receiving end receives the first signal and acquires the first data information carried in the first signal. It can be understood that, the first signal carries the first data information, and the first data information may be carried on at least one time-domain symbol. In this way, when the signal receiving end receives a detection signal, it may reduce the impact of frequency-domain offset on detection performance, thereby improving the signal detection performance.

The technical solutions provided in the embodiments of the present disclosure may be applied to various mobile communication networks, for example, new radio (New Radio, NR) mobile communication networks using 5th, future mobile communication networks or multiple communication fusion systems, etc., which are not limited to the embodiments of the present disclosure.

A network architecture of a mobile communication network (including but not limited to 3G, 4G, 5G and future mobile communication networks) in the embodiments of the present disclosure may at least include a first communication node and a second communication node. It should be understood that, in the example, the first communication node in downlink may be a network side device (for example, including but not limited to a base station), and the second communication node may be a terminal side device (for example, including but not limited to a terminal). Of course, in uplink, the first communication node may also be a terminal side device, and the second communication node may also be a network side device. In a case where two communication nodes are in a device-to-device communication, both the first communication node and the second communication node may be base stations or terminals. The first communication node and the second communication node may be referred to as a first node and a second node for short, respectively.

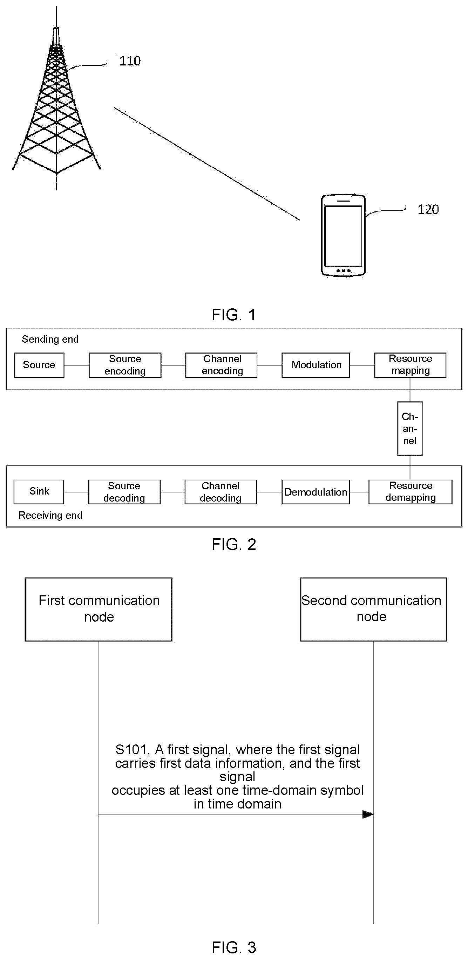

Exemplarily, taking an example in which the first communication node is a base station and the second communication node is a terminal, FIG. 1 shows a schematic diagram of a network architecture of a mobile communication network, provided by the embodiments of the present disclosure. As shown in FIG. 1, the mobile communication network includes a base station 110 and a terminal 120.

In some embodiments, the base station 110 is used to provide radio access services to a plurality of terminals 120. For example, a base station provides a service coverage area (also referred to as a cell). A terminal entering the area may communicate with the base station by a wireless signal, to receive a radio access service provided by the base station.

In some embodiments, a base station 110 may be a base station or an evolutional base station (evolutional node B, eNB or eNodeB) in long term evolution (LTE), long term evolution advanced (LTEA), a base station device in a 5G network, or a base station in a future communication system, etc. The base station may include various network side devices, such as various macro base stations, micro base stations, home base stations, wireless remote devices, reconfigurable intelligent surfaces ( RISs), routers, wireless fidelity (WIFI) devices, etc.

In some embodiments, the terminal 120 may be a device with a wireless transceiving function, may be deployed on land (including indoors or outdoors, handheld, worn or in-vehicle); may also be deployed on the water (e.g., on a ship, etc.); may also be deployed in the air (e.g., on an airplane, a balloon and a satellite, etc.). The terminal may be a mobile phone, a pad, a computer with a wireless transceiver function, a virtual reality (Virtual Reality, VR) terminal, an augmented reality (Augmented Reality, AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of the present disclosure do not limit the application scenarios. The terminal sometimes may also be referred to as a user, a UE, an access terminal, a UE unit, a UE station, a mobile station, a mobile platform, a remote station, a remote terminal, a mobile device, a UE terminal, a wireless communication device, a UE agent, or a UE apparatus, etc., which is not limited to the embodiments of the present disclosure.

It should be noted that, FIG. 1 is only an exemplary framework diagram, and a number of devices and names of the various devices included in FIG. 1 are not limited, and in addition to the devices shown in FIG. 1, the communication system may also include other devices, such as a core network device.

The embodiments of the present disclosure do not limit application scenarios. The system architectures and the service scenarios described in the embodiments of the present disclosure are provided for more clearly explaining the technical solutions of the embodiments of the present disclosure, and do not constitute a limitation on the technical solutions provided in the embodiments of the present disclosure, and the ordinary skilled in the art may know that with the evolution of the network architectures and the emergence of new service scenarios, the technical solutions provided in the embodiments of the present disclosure are also applicable to similar technical problems.

FIG. 2 is a data processing flow diagram of a sending end and a receiving end. As shown in FIG. 2, the sending end performs processings such as source coding, channel coding, modulation, and resource mapping on the source (i.e., the to-be-transmitted data), and then transmits the resulting signal to the receiving end. After receiving the signal, the receiving end performs resource demapping, demodulation, channel decoding, and source decoding on the signal to obtain the sink (i.e., the restored source).

The signal sending method and the signal receiving method provided by the embodiments of the present disclosure are introduced in detail below. Exemplarily, the signal sending method and the signal receiving method provided by the embodiments of the present disclosure may be applied to the mobile communication network as shown in FIG. 1.

As shown in FIG. 3, the signal sending method and the signal receiving method provided by the embodiments of the present disclosure may include S101.

In S101, a first communication node sends a first signal. Correspondingly, a second communication node receives the first signal.

Exemplarily, the above first signal may be an LP-WUS signal. It can be understood that, a ultra-low-power wake-up mechanism (LP-WUS) signal is adopted, which may reduce energy consumption.

The first signal occupies at least one time-domain symbol in the time domain.

Exemplarily, the above time-domain symbol may include any one of: an on-off keying (OOK) symbol, a multi-carrier OOK (MC-OOK) symbol, a frequency-shift keying (FSK) symbol, a multi-carrier FSK (MC-FSK) symbol, and an orthogonal frequency division multiplexing (OFDM) symbol. In some embodiments, the above time-domain symbol is an OFDM symbol.

In some embodiments, the first signal carries the first data information.

Exemplarily, the first data information may include at least one of: source information, a cyclic redundancy check (CRC) bit, or a padding bit (padding bits).

The padding bit is used to pad a missing bit when a number of the first data information is less than a default number or a configured number. Exemplarily, assume that the number of the first data information $B_{LB}$ is $L_1^B$ bits, and the default number is $L^B$. If $L_1^B < L^B$, the first data information $B_{LB}$ further includes ( $L^B - L_1^B$ ) padding bits. The padding bit may be used to pad some default values.

In some embodiments, the above first signal carrying the first data information includes: the first signal carrying at least one piece of second data information generated from the first data information.

The above second data information includes at least one piece of second sub-data information; and each piece of second sub-data information is carried on at least one time-domain symbol for transmission.

Exemplarily, frequency-domain resource positions occupied by time-frequency resources corresponding to each piece of second sub-data information in frequency domain are the same; or, frequency-domain resources occupied by the time-frequency resources corresponding to each piece of second sub-data information are independently configured in the frequency domain; or the frequency-domain resource positions occupied by the time-frequency resources corresponding to each piece of second sub-data information in the frequency domain are indicated by information. Exemplarily, the base station may indicate a detailed frequency-domain resource position through information; or, determine a detailed frequency-domain resource position according to a default configuration; or, determine a detailed frequency-domain resource position according to frequency hopping rules and in combination with the information sent from the base station.

In some embodiments, the above second data information is generated by following manners.

Manner 1: generate the second data information through a1 to a3 as follows.

In a1, a first operation is performed on the first data information, to obtain third data information.

Exemplarily, assume that the first data information may be represented as $B_{LB} = [b_0, b_1, b_2, b_3, \cdots, b_{LB-1}]$, then the first operation is performed on the first data information, to obtain the third data information $C_{LC} = [c_0, c_1, c_2, c_3, \cdots, c_{LC-1}]$, where a length of the third data information is $L^C$ bits.

Exemplarily, the above first operation may include at least one of: bit-level repetition, coding, modulation, interleaving, adding padding bits, or adding CRC bits.

The bit-level repetition operation performed on the first data information refers to repeating each piece of bit information in the first data information.

Exemplarily, assume that the first data information $B_{LB}$ may be represented as $B_{LB} = [b_0, b_1, b_2, b_3, \cdots, b_{LB-1}]$, with a length of $L^B$ bits. Then, performing a bit-level repetition operation on the first data information $B_{LB}$ includes: repeating $b_i$ in the first data information $B_{LB}$ for R0 times, to generate data information $C_{R_0}^i$ with a length of R0, and $C_{R_0}^i$ may be represented as

$$C_{R_0}^i = \underbrace{[b_i, b_i, b_i, \cdots, b_i]}_{R0}$$, where $0 \le i \le L^B$-1.

Exemplarily, the above coding may include at least one of: Manchester coding, Miller coding, Pulse interval encoding (PIE), bi-phase space coding (or referred to as FM0 coding), reed-muller (RM) coding, or Polar coding, etc.

Interleaving is used to separately consecutive bits in the information and send them in a nonconsecutive form.

Adding padding bits refers to adding padding bits to the first data information.

Adding CRC bits refers to adding CRC bits to the first data information. Exemplarily, adding CRC bits may be implemented as follows.

When the source information is 2 bits, the CRC is selected from [2, 4, 6, 8] bits.

When the source information is 4 bits, the CRC is selected from [4, 6, 8, 10] bits.

When the source information is 6 bits, the CRC is selected from [4, 6, 8, 10, 12] bits.

When the source information is 8 bits, the CRC is selected from [4, 6, 8, 10, 12, 14, 16] bits.

When the source information is 10 bits, the CRC is selected from [6, 8, 10, 12, 14, 16] bits.

When the source information is 12 bits, the CRC is selected from [6, 8, 10, 12, 14, 16] bits.

When the source information is 14 bits, the CRC is selected from [6, 8, 10, 12, 14, 16] bits.

When the source information is 16 bits, the CRC is selected from [8, 10, 12, 14, 16, 18, 20, 22, 24] bits.

When the source information is 18 bits, the CRC is selected from [8, 10, 12, 14, 16, 18, 20, 22, 24] bits.

When the source information is 20 bits, the CRC is selected from [8, 10, 12, 14, 16, 18, 20, 22, 24] bits.

When the source information is 22 bits, the CRC is selected from [8, 10, 12, 14, 16, 18, 20, 22, 24] bits.

When the source information is 24 bits, the CRC is selected from [8, 10, 12, 14, 16, 18, 20, 22, 24] bits.

When the source information is 36 bits, the CRC is selected from [8, 10, 12, 14, 16, 18, 20, 22, 24, 32, 36, 48] bits.

When the source information is 48 bits, the CRC is selected from [8, 10, 12, 14, 16, 18, 20, 22, 24, 32, 36, 48] bits.

In a2, the third data information is divided into at least one piece of third sub-data information.

The third sub-data information includes consecutive multiple data elements in the third data information.

It can be understood that, a piece of third sub-data information may serve as a data block (Block), including all or a part of the data information in the third data information. Exemplarily, in a case where the third data information is divided into multiple pieces of third sub-data information, contents of each piece of third sub-data information are different, and the set of multiple pieces of third sub-data information constitutes complete third data information; in a case where the third data information is divided into a piece of third sub-data information, the third sub-data information includes all data information of the third data information.

Exemplarily, the third sub-data information with index i among the at least one piece of third sub-data information may be represented as $E_{L_i^E} = \left[ e_0, e_1, e_2, e_3, \cdots, e_{L_i^E-1} \right]$, with a length of $L_i^E$ bits. i is an integer, and $0 \leq i \leq I - 1$, where I is an integer greater than or equal to 1. It can be seen that, when a value of i is 0, a number of the third sub-data information is 1, i.e., the third sub-data information is the third data information.

In some embodiments, the third sub-data information may be carried by sequences. Exemplarily, assume that a length of the third sub-data information $E_{L_i^E}$ is 4, then $4^2=16$ sequences may be used to carry different values of the third sub-data information.

In a3, for each piece of third sub-data information, the third sub-data information is repeated for R1 times, to obtain second data information, where R1 is a positive integer.

It can be understood that, the third sub-data information is repeated for 1 times, that is, the third sub-data information is sent for 1 times in the first signal.

In Manner 1, the third sub-data information is the above second sub-data information. That is, a piece of third sub-data information may be carried on at least one time-domain symbol for transmission.

Exemplarily, the second data information constituted by repeating the third sub-data information for R1 times may be $H_{L_i^H}$, $H_{L_i^H}$ may be represented as $H_{L_i^H} = \underbrace{\left[ E_{L_i^E}, E_{L_i^E}, E_{L_i^E}, \cdots, E_{L_i^E} \right]}_{R1}$. A length of $H_{L_i^H}$ is R1* $L_i^E$. $H_{L_i^H}$ may be carried on R1 time-domain symbols for transmission. Frequency-domain resource positions occupied by $H_{L_i^H}$ in R1 time-domain symbols are the same; or the frequency-domain resource positions occupied by $H_{L_i^H}$ in the R1 time-domain symbols are independently configured; or the frequency-domain resource positions occupied by $H_{L_i^H}$ in the R1 time-domain symbols may be indicated by information.

Manner 2: Generate the second data information through b1 to b2 as follows.

In b1, a first operation is performed on the first data information, to obtain third data information.

Exemplarily, for the implementation of the above b1, for example, reference may be made to the above a1, which will not be repeated herein.

In b2, the third data information is repeated for R1 times, to obtain second data information, where R1 is a positive integer.

In Manner 2, the third data information is the above second sub-data information. That is, a piece of third data information may be carried on at least one time-domain symbol for transmission.

Exemplarily, the second data information constituted by repeating the third data information for R1 times may be $H_{L_i^H}$, $H_{L_i^H}$ may be represented as $H_{L_i^H} = \underbrace{\left[ E_{L_i^E}, E_{L_i^E}, E_{L_i^E}, \cdots, E_{L_i^E} \right]}_{R1}$. A length of $H_{L_i^H}$ is R1* $L_i^E$. $H_{L_i^H}$ may be carried on R1 time-domain symbols for transmission. Frequency-domain resource positions occupied by $H_{L_i^H}$ in R1 time-domain symbols are the same; or the frequency-domain resource positions occupied by $H_{L_i^H}$ in the R1 time-domain symbols are independently configured; or the frequency-domain resource positions occupied by $H_{L_i^H}$ in the R1 time-domain symbols may be indicated by information.

Manner 3: Generate the second data information through c1 to c2 as follows.

In c1, the first data information is divided into at least one piece of first sub-data information.

The first sub-data information includes consecutive multiple data elements in the first data information.

It can be understood that, a piece of first sub-data information may serve as a data block (Block), including all or a part of the data information in the first data information. Exemplarily, in a case where the first data information is divided into multiple pieces of first sub-data information, contents of each piece of first sub-data information are different, and the set of multiple pieces of first sub-data information constitutes complete first data information; in a case where the first data information is divided into a piece of first sub-data information, the first sub-data information includes all data information of the first data information.

Exemplarily, the first sub-data information with index i among the at least one piece of first sub-data information may be represented as $E_{L_i^E} = \left[ e_0, e_1, e_2, e_3, \cdots, e_{L_i^E - 1} \right]$, with a length of $L_i^E$. i is an integer, and $0 \leq i \leq I - 1$, where I is an integer greater than or equal to 1. It can be seen that, when a value of i is 0, a number of the first sub-data information is 1, i.e., the first sub-data information is the first data information.

In some embodiments, the first sub-data information may be carried by sequences. Exemplarily, assume that a length of the first sub-data information $E_{L_i^E}$ is 4, then $4^2 = 16$ sequences may be used to carry different values of the first sub-data information.

In c2, for each piece of first sub-data information, the first sub-data information is repeated for R1 times, to obtain the second data information, where R1 is a positive integer.

In Manner 3, the above first sub-data information is the above second sub-data information. That is, a piece of first sub-data information may be carried on at least one time-domain symbol for transmission.

Exemplarily, the second data information constituted by repeating the first sub-data information for R1 times may be $H_{L_i^H}$, $H_{L_i^H}$ may be represented as $H_{L_i^H} = \underbrace{\left[ E_{L_i^E}, E_{L_i^E}, E_{L_i^E}, \cdots, E_{L_i^E} \right]}_{R1}$. A length of $H_{L_i^H}$ is R1* $L_i^E$. $H_{L_i^H}$ may be carried on R1 time-domain symbols for transmission. Frequency-domain resource positions occupied by $H_{L_i^H}$ in R1 time-domain symbols are the same; or the frequency-domain resource positions occupied by $H_{L_i^H}$ in the R1 time-domain symbols are independently configured; or the frequency-domain resource positions occupied by $H_{L_i^H}$ in the R1 time-domain symbols are indicated by information.

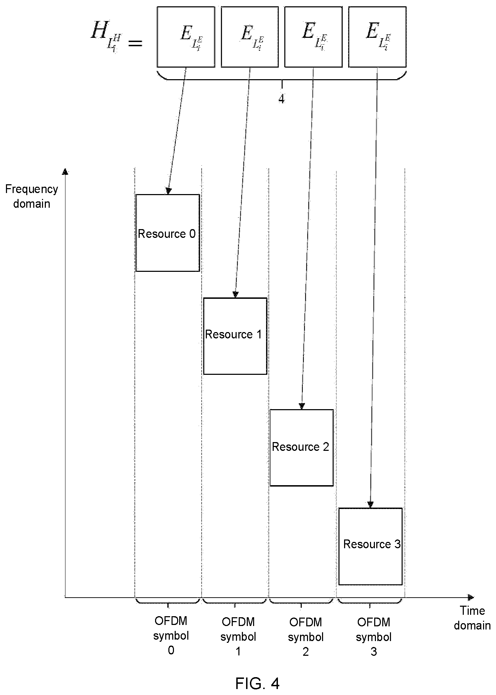

Exemplarily, as shown in FIG. 4, assume that R1 is 4, then the second data information may be represented as $H_{L_i^H} = \underbrace{\left[ E_{L_i^E}, E_{L_i^E}, E_{L_i^E}, E_{L_i^E} \right]}_{4}$, and the second data information $H_{L_i^H}$ may be carried on 4 time-domain symbols (e.g., OFDM symbols) for transmission, and occupy resource 0, resource 1, resource 2, and resource 3, respectively. The resource 0 is in OFDM symbol 0, resource 1 is in OFDM symbol 1, resource 2 is in OFDM symbol 2, and resource 3 is in OFDM symbol 3. If the first communication node does not support frequency hopping, the frequency-domain resource positions occupied by the 4 resources in the 4 OFDM symbols may be the same. If the first communication node supports frequency hopping, the frequency-domain resource positions occupied by the 4 resources in the 4 OFDM symbols may be determined according to frequency-domain frequency hopping rules.

Manner 4: Generate the second data information through d1 to d2 as follows.

In d1, a first operation is performed on each bit in the first data information, to obtain fourth data information.

Assume that the first data information may be represented as $B_{LB} = [b_0, b_1, b_2, b_3, \cdots, b_{LB-1}]$, then performing the first operation on each bit in the first data information refers to performing the first operation on $b_i$ in the first data information $B_{LB}$ to obtain the fourth data information $C_{L_i^C}^i$; the fourth data information $C_{L_i^C}^i$ may be represented as $C_{L_i^C}^i = \left[ c_0^i, c_1^i, \cdots, c_{L_i^C - 1}^i \right]$, and a length of the fourth data information $C_{L_i^C}^i$ is $L_i^C$ bits, where bits, where $0 \leq i \leq L^B - 1$.

Exemplarily, the above first operation may include at least one of: bit-level repetition, coding, modulation, interleaving, adding padding bits, or adding CRC bits.

Exemplarily, in a case where the above coding includes Manchester coding and a code rate is 1/4, if $b_i$ in the first data information $B_{LB}$ is equal to 0, data information $C_{L_i^C}^i$ generated by $b_i$ through Manchester coding is [1 0 1 0]. When $b_i$ in the first data information $B_{LB}$ is equal to 1, data information $C_{L_i^C}^i$ generated by $b_i$ through Manchester coding is [0 1 0 1].

In d2, the fourth data information is repeated for R1 times, to obtain the second data information, where R1 is a positive integer.

In Manner 4, the above fourth data information is the above second sub-data information. That is, a piece of fourth data information may be carried on at least one time-domain symbol for transmission.

It should be noted that, the embodiments of the present disclosure do not limit an execution order of d1 and d2. Exemplarily, the Manner 4 may also be implemented as that: for each bit in the first data information, the bit is repeated for R1 times; and then the first operation is performed on each bit that is repeated, to obtain the fourth data information.

Exemplarily, the second data information obtained by repeating the fourth data information for R1 times may be $H_{L_i^H}$, $H_{L_i^H}$ may be represented as

$$H_{L_i^H} = \underbrace{\left[ \left( c_0^i, c_1^i, \cdots, c_{L_i^C-1}^i \right), \left( c_0^i, c_1^i, \cdots, c_{L_i^C-1}^i \right), \cdots, \left( c_0^i, c_1^i, \cdots, c_{L_i^C-1}^i \right) \right]}_{R1}, \quad L_i^H = R1 * L_i^C.$$

Exemplarily, assume that R1 is 4, then the second data information $H_{L_i^H}$ may be represented as

$$H_{L_i^H} = \underbrace{\left[ \left( c_0^i, c_1^i, \cdots, c_{L_i^C-1}^i \right), \left( c_0^i, c_1^i, \cdots, c_{L_i^C-1}^i \right), \left( c_0^i, c_1^i, \cdots, c_{L_i^C-1}^i \right), \left( c_0^i, c_1^i, \cdots, c_{L_i^C-1}^i \right) \right]}_{4}$$, and the second data information $H_{L_i^H}$ may be carried on 4 time-domain symbols (e.g., OFDM symbols) for transmission, and occupy resource 0, resource 1, resource 2, and resource 3, respectively. The resource 0 is in OFDM symbol 0, resource 1 is in OFDM symbol 1, resource 2 is in OFDM symbol 2, and resource 3 is in OFDM symbol 3.

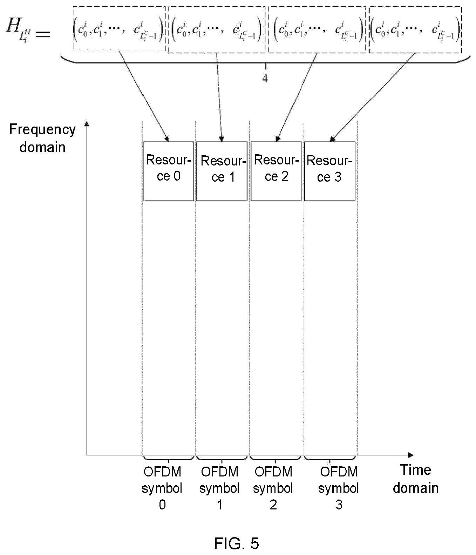

As shown in FIG. 5, if the first communication node does not support frequency hopping, the frequency-domain resource positions occupied by the 4 resources in the 4 OFDM symbols may be the same.

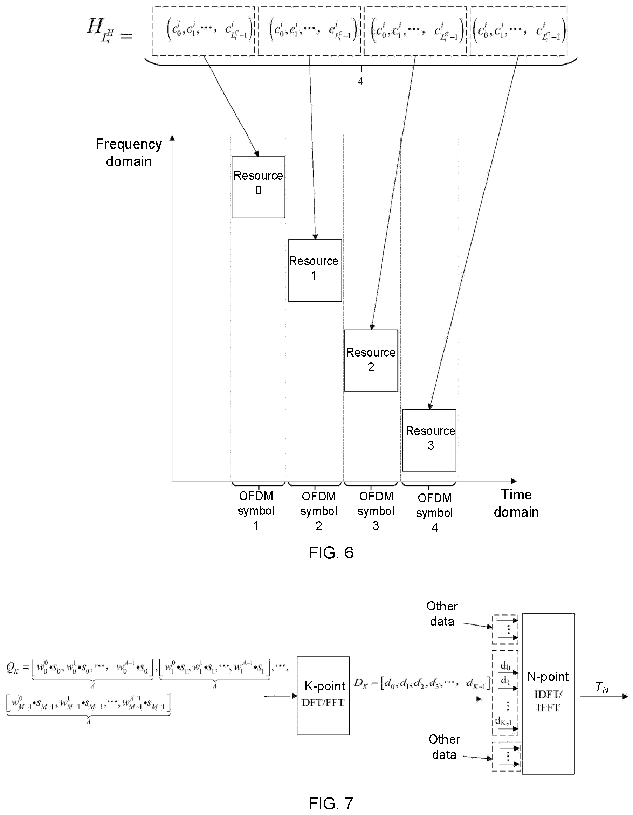

As shown in FIG. 6, if the first communication node supports frequency hopping, the frequency-domain resource positions occupied by the 4 resources in the 4 OFDM symbols may be independently configured, or adopt a frequency-domain frequency hopping pattern.

In some embodiments, a data element in the above second data information corresponds to a sequence. Exemplarily, the above sequence may be a scrambling sequence, a PN sequence, or a ZC sequence.

In some embodiments, sequences corresponding to each data element in the second data information are the same. Exemplarily, the above sequence may be a scrambling sequence, a PN sequence, or a ZC sequence.

In some embodiments, sequences corresponding to data elements with a value of 1 in the second data information are the same. Exemplarily, the above sequence may be a scrambling sequence, a PN sequence, or a ZC sequence.

In some embodiments, sequences corresponding to data elements at a same position in the R1 repeated fourth data information in the second data information are the same. Exemplarily, the above sequence may be a scrambling sequence, a PN sequence, or a ZC sequence.

Exemplarily, in a case where the Manchester coding is adopted and a code rate is 1/4, if $b_i$ in the first data information $B_{LB}$ is equal to 0, data information $C_{L_i^C}^i$ generated by the Manchester coding for $b_i$ is [1 0 1 0]. When $b_i$ in the first data information $B_{LB}$ is equal to 1, data information $C_{L_i^C}^i$ generated by the Manchester coding for $b_i$ is [0 1 0 1]. In the embodiments of the present disclosure, take an example in which $b_i$ in the first data information $B_{LB}$ is equal to 1 and the fourth data information $C_{L_i^C}^i$ generated by coding is [0 1 0 1] for explanation.

Assume that the number R1 of repetitions of the fourth data information $C_{L_i^C}^i$ is 4, then the expression of the constituted second data information $H_{L_i^H}$ is $H_{L_i^H} = \underbrace{\left[ \left( 0 \ 1 \ 0 \ 1 \right), \left( 0 \ 1 \ 0 \ 1 \right), \left( 0 \ 1 \ 0 \ 1 \right), \left( 0 \ 1 \ 0 \ 1 \right) \right]}_{4}$.

In this embodiment, the second data information $H_{L_i^H}$ may be carried on MC-OOK based LP-WUS symbols for transmission. An LP-WUS symbol carries a data element in the second data information $H_{L_i^H}$, so a total of 16 LP-WUS symbols are required to carry the second data information $H_{L_i^H}$.

Exemplarily, time-domain resources corresponding to 4 MC-OOK based LP-WUS symbols may be contained in an OFDM symbol, so 16 MC-OOK based LP-WUS symbols correspond to 4 OFDM symbols. For example, a first (0 1 0 1) in $H_{L_i^H}$ is carried in the OFDM symbol 0 for transmission and occupies the resource 0; a second (0 1 0 1) is carried in the OFDM symbol 1 for transmission and occupies the resource 1; a third (0 1 0 1) is carried in the OFDM symbol 2 for transmission and occupies the resource 2; and a fourth (0 1 0 1) is carried in the OFDM symbol 3 for transmission and occupies the resource 3. Resource 0, resource 1, resource 2, and resource 3 occupy a same frequency-domain resource position in the **frequency** domain.

Exemplarily, sequences $\left[ w_i^0, w_i^0, \cdots, w_i^{A-1} \right]$ configured for data elements in the second data information $H_{L_i^H}$ are the same.

Exemplarily, the sequences $\left[ w_i^0, w_i^0, \cdots, w_i^{A-1} \right]$ configured for data elements with a value of '1' in the second data information $H_{L_i^H}$ are the same.

Exemplarily, the sequences $\left[ w_i^0, w_i^0, \cdots, w_i^{A-1} \right]$ configured for data elements at a same position in the R1 pieces of fourth data information $C_{L_i^C}^i$ in the second data information $H_{L_i^H}$ are the same. For example, the sequence corresponding to a first data element 0 in the first (0 1 0 1) is the same as the sequence corresponding to a first data element 0 in the second (0 1 0 1) in $H_{L_i^H}$.

Exemplarily, the sequences $\left[ w_i^0, w_i^0, \cdots, w_i^{A-1} \right]$ configured for data elements with a value of '1' at a same position in the R1 pieces of fourth data information $C_{L_i^C}^i$ in the second data information $H_{L_i^H}$ are the same. For example, the sequence corresponding to a second data element 1 in the first (0 1 0 1) is the same as the sequence corresponding to a second data element 1 in the second (0 1 0 1) in $H_{L_i^H}$.

In some embodiments, a time-domain expression of the MC-OOK based LP-WUS symbol may be generated according to the e1 to e6 as follows.

In e1, it is assumed that an OFDM symbol includes M MC-OOK based LP-WUS symbols, and if data information sent on the M OOK symbols is $S_M$, then $S_M = [s_0, s_1, s_2, s_3, \cdots, s_{M-1}]$ is defined, and the length is M bits. M is an integer greater than or equal to 1.

Exemplarily, in the above embodiments, $S_M = [s_0, s_1, s_2, s_3, \cdots, s_{M-1}] = [0\ 1\ 0\ 1]$, and M is equal to 4.

In e2, the data information $S_M$ is converted into data information $Q_K$. The length of $Q_K$ is K bits, where K is greater than or equal to M.

As an implementation, the data information $S_M$ may be converted into the data information $Q_K$ according to the Formula (1) as follows.

$$Q_K = \left[ \underbrace{w_0^0 \bullet s_0, w_0^1 \bullet s_0, \cdots, w_0^{A-1} \bullet s_0}_{A} \right], \left[ \underbrace{w_1^0 \bullet s_1, w_1^1 \bullet s_1, \cdots, w_1^{A-1} \bullet s_1}_{A} \right], \cdots, \left[ \underbrace{w_{M-1}^0 \bullet s_{M-1}, w_{M-1}^1 \bullet s_{M-1}, \cdots, w_{M-1}^{A-1} \bullet s_{M-1}}_{A} \right]$$

<div align="right">Formula (1)</div>

$$M*A=K.$$

The sequence $\left[ w_i^0, w_i^0, \cdots, w_i^{A-1} \right]$ may be configured according to actual needs, where $0 \le i \le M-1$.

K is a number of subcarriers of OFDM configured for the MC-OOK based LP-WUS symbol in the frequency domain.

As another implementation, the data information $S_M$ may be converted into the data information $Q_K$ according to the Formula (2) as follows.

$$Q_K = \left[ \underbrace{w_0^0 \bullet s_0, w_0^1 \bullet s_0, \cdots, w_0^{A_0-1} \bullet s_0}_{A_1} \right], \left[ \underbrace{w_1^0 \bullet s_1, w_1^1 \bullet s_1, \cdots, w_1^{A_1-1} \bullet s_1}_{A_1} \right], \cdots, \left[ \underbrace{w_{M-1}^0 \bullet s_{M-1}, w_{M-1}^1 \bullet s_{M-1}, \cdots, w_{M-1}^{A_M-1} \bullet s_{M-1}}_{A_{M-1}} \right]$$

<div align="right">Formula (2)</div>

$$A_0 + A_1 + \ldots + A_i + \ldots + A_{M-1} = K.$$

The sequence $\left[w_i^0, w_i^0, \cdots, w_i^{A-1}\right]$ may be configured according to actual needs, where $0 \leq i \leq M-1$.

K is a number of subcarriers of OFDM configured for the MC-OOK based LP-WUS symbol in the frequency domain.

It can be understood that, the above Formula (1) and Formula (2) are only two exemplary manners for generating the data information $Q_K$. In some other embodiments, other manners may also be adopted to generate the data information $Q_K$, which is not limited to the embodiments of the present disclosure.

In e3, as shown in FIG. 7, a K-point discrete fourier transform (DFT) or fast fourier transform (FFT) is performed on the data information $Q_K$ to obtain data information $D_K = [d_0, d_1, d_2, d_3, \cdots, d_{K-1}]$.

In e4, as shown in FIG. 7, the data information $D_K$ is padded onto K OFDM subcarriers corresponding to the LP-WUS in the frequency domain.

In e5, as shown in FIG. 7, an N-point inverse discrete fourier transform (IDFT) or inverse fast fourier transform (IFFT) operation is performed on padded data on N subcarriers, to obtain time-domain data $T_N = [t_0, t_1, t_2, t_3, \cdots, t_{N-1}]$ with N sampling points.

It can be understood that, except the K OFDM subcarriers occupied by the LP-WUS in the frequency-domain bandwidth of the system, other subcarriers may also be padded with other data information. Therefore, when the frequency-domain bandwidth of the system includes N OFDM subcarriers, time-domain data $T_N$ with N sampling points may be obtained by performing the above e5.

In e6, a time-domain expression of the MC-OOK based LP-WUS symbol is determined.

In some embodiments, when no other data is sent in the system except the LP-WUS, $T_N = [t_0, t_1, t_2, t_3, \cdots, t_{N-1}]$ is determined to be data with sampling points of M OOK time-domain symbols.

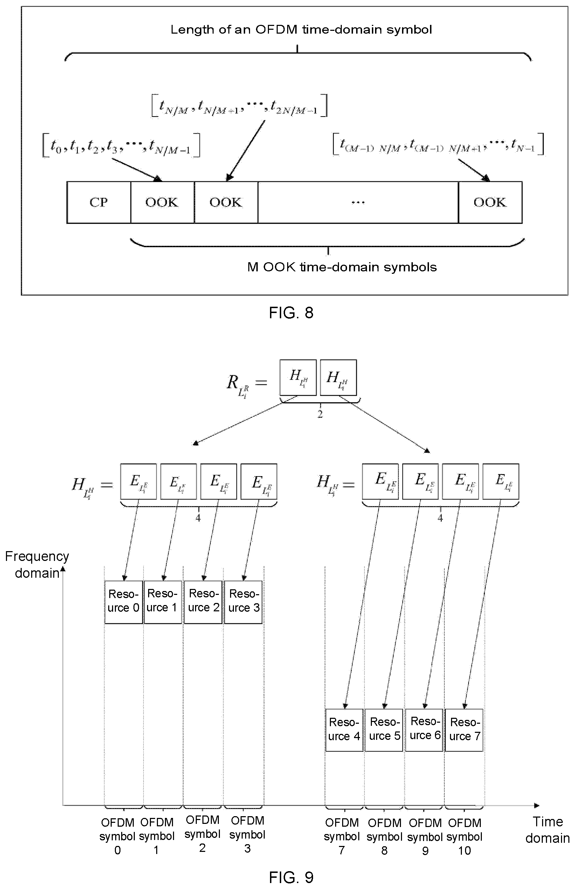

Exemplarily, as shown in FIG. 8, $[t_0, t_1, t_2, t_3, \cdots, t_{N/M-1}]$ is the data with sampling points of a first OOK time-domain symbol among the M OOK time-domain symbols, $[t_{N/M}, t_{N/M+1}, \cdots, t_{2N/M-1}]$ is the data with sampling points of a second OOK time-domain symbol among the M OOK time-domain symbols, and so on, $[t_{(M-1) N/M}, t_{(M-1) N/M+1}, \cdots, t_{N-1}]$ is the data with sampling points of the M-th OOK time-domain symbol among the M OOK time-domain symbols.

In some embodiments, when other data is sent in the system except the LP-WUS, $T_N = [t_0, t_1, t_2, t_3, \cdots, t_{N-1}]$ is determined to be a superposition expression of the data with sampling points **of the** time-domain symbols of the LP-WUS and the other data.

The data with sampling points of the first OOK time-domain symbol among the M OOK time-domain symbols is contained in $[t_0, t_1, t_2, t_3, \cdots, t_{N/M-1}]$; the data with sampling points of the second OOK time-domain symbol among the M OOK time-domain symbols is contained in $[t_{N/M}, t_{N/M+1}, \cdots, t_{2N/M-1}]$, and so on; the data with sampling points of the M-th OOK time-domain symbol among the M OOK time-domain symbols is contained in $[t_{(M-1) N/M}, t_{(M-1) N/M+1}, \cdots, t_{N-1}]$.

In some embodiments, before the time-domain data $T_N = [t_0, t_1, t_2, t_3, \cdots, t_{N-1}]$ with N sampling points is sent, a cyclic prefix (CP) operation needs to be performed. Specifically, the last $N_{cp}$ sampling point information of the time-domain data $T_N$ with N sampling points is copied to a head of the time-domain data $T_N$ with N sampling points to form time-domain data with $(N + N_{cp})$ sampling points, which is then transmitted.

In some embodiments, the first signal carrying at least one piece of second data information includes: the first signal carrying at least one piece of fifth data information, where each piece of fifth data information is obtained by repeating the second data information for R2 times, and R2 is a positive integer.

Exemplarily, in a piece of fifth data information, the frequency-domain resource positions occupied by the time-frequency resources corresponding to each piece of second data information in the frequency domain are the same; or the frequency-domain resource positions occupied by the time-frequency resources corresponding to each piece of second data information in the frequency domain are independently configured; or the frequency-domain resource positions occupied by the time-frequency resources corresponding to each piece of second data information in the frequency domain are indicated by information.

Exemplarily, the fifth data information $R_{L_i^R}$ obtained by repeating the second data information $H_{L_i^H}$ for R2 times,

$R_{L_i^R}$ may be represented as $R_{L_i^R} = \underbrace{\left[H_{L_i^H}, H_{L_i^H}, \cdots, H_{L_i^H}\right]}_{R2}$ and the length $L_i^R$ of $R_{L_i^R}$ is equal to $R2 * H_{L_i^H}$.

Exemplarily, as shown in FIG. 9, assume that R1 is 4 then the second data information $H_{L_i^H}$ obtained through the above Manner 1, Manner 2 or Manner 3 may be represented as $H_{L_i^H} = \underbrace{\left[E_{L_i^E}, E_{L_i^E}, E_{L_i^E}, E_{L_i^E}\right]}_{4}$. Assume that R2 is 2, then the fifth data information obtained by repeating the second data information for 2 times may be represented as

$R_{L_i^R} = \underbrace{\left[H_{L_i^H}, H_{L_i^H}\right]}_{2}$.

First second data information $H_{L_i^H}$ in the fifth data information $R_{L_i^R}$ is carried on 4 time-domain symbols (e.g., OFDM symbols) for transmission, and occupies resource 0, resource 1, resource 2 and resource 3, respectively (each resource is used to transmit a $E_{L_i^E}$ ). The resource 0 is in the OFDM symbol 0, the resource 1 is in the OFDM symbol 1, the resource 2 is in the OFDM symbol 2, and the resource 3 is in the OFDM symbol 3. The frequency-domain resource positions occupied by the 4 resources in the 4 OFDM symbols may be the same.

Second second data information $H_{L_i^H}$ in the fifth data information $R_{L_i^H}$ is carried on 4 OFDM symbols for transmission, and occupies resource 4, resource 5, resource 6 and resource 7, respectively (each resource is used to transmit a $E_{L_i^E}$). The resource 4 is in the OFDM symbol 4, the resource 5 is in the OFDM symbol 5, the resource 6 is in the OFDM symbol 6, and the resource 7 is in the OFDM symbol 7. The frequency-domain resource positions occupied by the 4 resources in the 4 OFDM symbols may be the same, but different from the frequency-domain resource positions occupied by the first second data information $H_{L_i^H}$ in the fifth data information $R_{L_i^H}$ .

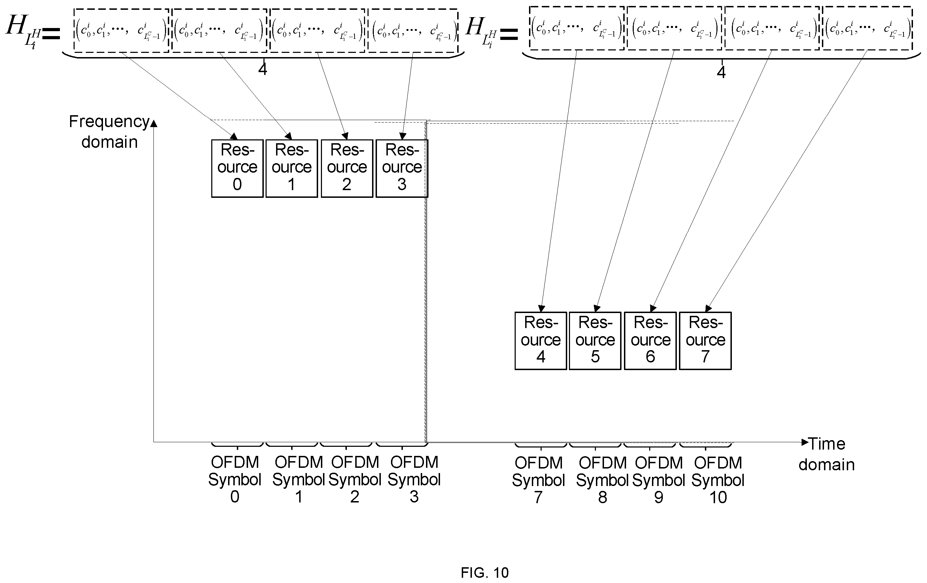

Exemplarily, as shown in FIG. 10, assume that R1 is 4, then the second data information $H_{L_i^H}$ obtained through the above Manner 4 may be represented as

$$H_{L_i^H} = \underbrace{\left[\left(c_0^i, c_1^i, \cdots, \ c_{L_i^C-1}^i\right), \left(c_0^i, c_1^i, \cdots, \ c_{L_i^C-1}^i\right), \left(c_0^i, c_1^i, \cdots, \ c_{L_i^C-1}^i\right), \left(c_0^i, c_1^i, \cdots, \ c_{L_i^C-1}^i\right)\right]}_{4}$$

. Assume that R2 is 2, then the fifth data information obtained by repeating the second data information for 2 times may be represented as

$$R_{L_i^R} = \underbrace{\left[H_{L_i^H}, H_{L_i^H}\right]}_{2}$$

.

First second data information $H_{L_i^H}$ in the fifth data information $R_{L_i^R}$ is carried on 4 time-domain symbols (e.g., OFDM symbols) for transmission, and occupies resource 0, resource 1, resource 2 and resource 3, respectively (each resource is used to transmit a $\left(c_0^i, c_1^i, \cdots, \ c_{L_i^C-1}^i\right)$ ). The resource 0 is in the OFDM symbol 0, the resource 1 is in the OFDM symbol 1, the resource 2 is in the OFDM symbol 2, and the resource 3 is in the OFDM symbol 3. The frequency-domain resource positions occupied by the 4 resources in the 4 OFDM symbols may be the same.

Second second data information $H_{L_i^H}$ in the fifth data information $R_{L_i^H}$ is carried on 4 OFDM symbols for transmission, and occupies resource 4, resource 5, resource 6 and resource 7 respectively (each resource is used to transmit a $\left(c_0^i, c_1^i, \cdots, \ c_{L_i^C-1}^i\right)$ ). The resource 4 is in the OFDM symbol 4, the resource 5 is in the OFDM symbol 5, the resource 6 is in the OFDM symbol 6, and the resource 7 is in the OFDM symbol 7. The frequency-domain resource positions occupied by the 4 resources in the 4 OFDM symbols may be the same, but different from the frequency-domain resource positions occupied by the first second data information $H_{L_i^H}$ in the fifth data information $R_{L_i^H}$ .

In some embodiments, the first signal carrying at least one piece of second data information includes: the first signal carrying sixth data information, where the sixth data information is obtained by repeating seventh data information for R3 times; the seventh data information consists of at least one piece of second data information; or the seventh data information consists of at least one piece of fifth data information, and R3 is a positive integer.

Exemplarily, in a piece of sixth data information, the frequency-domain resource positions occupied by the time-frequency resources corresponding to each piece of seventh data information in the frequency domain are the same; or the frequency-domain resource positions occupied by the time-frequency resources corresponding to each piece of seventh data information in the frequency domain are independently configured; or the frequency-domain resource positions occupied by the time-frequency resources corresponding to each piece of seventh data information in the frequency domain are indicated by information.

Exemplarily, the seventh data information $P_{LP}$ formed by combining at least one piece of second data information $H_{L_i^H}$ may be represented as $P_{L^P} = \left[H_{L_0^H}, H_{L_1^H}, H_{L_2^H} \cdots, H_{L_i^H-1}\right]$, and a length of the seventh data information $P_{LP}$ is $L^P = \sum_{i=0}^{I-1} L_i^H$ bits.

Exemplarily, the seventh data information $P_{LP}$ constructed by combining at least one piece of fifth data information $R_{L_i^R}$ may be represented as $P_{L^P} = \left[R_{L_0^R}, R_{L_1^R}, R_{L_2^R} \cdots, R_{L_i^R-1}\right]$, and a length of the seventh data information

$P_{LP}$ is $L^P = \sum_{i=0}^{I-1} L_i^R$ bits.

Exemplarily, the sixth data information $X_{LX}$ obtained by repeating the seventh data information $P_{LP}$ for R3 times may be represented as $X_{LX} = \underbrace{\left[ P_{L^P}, P_{L^P}, \cdots, P_{L^P} \right]}_{R3}$ .

For ease of understanding, the data rights and interests management information provided in the embodiments of the present disclosure will be described below by taking different scenarios as examples, respectively.

It can be understood that, in the signal sending method and signal receiving method provided by the embodiments of the present disclosure, the signal sending end sends a first signal and carries first data information in the first signal; the first signal may occupy at least one time-domain symbol (e.g., may be an OFDM symbol). In the embodiments of the present disclosure, operations, such as the first operation, block division, and repetition, etc., may be performed on the first data information to reduce the impact of frequency-domain offset on detection performance. Simultaneously, the first data information may be carried on at least one time-domain symbol for transmission, and different methods may be adopted to configure frequency-domain resources occupied by the first data information. Thus, when the signal receiving end receives and detects the signal, it may effectively reduce the impact of frequency-domain offset on detection performance.

Scenario 1: the first signal carries fifth data information. First, the second data information is generated based on the above Manner 3, and further the fifth data information is obtained by repeating the second data information for R2 times.

The following embodiments are explained by taking the first signal as an LP-WUS signal.

Exemplarily, in Scenario 1, the signal sending method provided by the embodiments of the present disclosure may be implemented as f1 to f5.

In f1, first data information is constructed.

A length $L^B$ of the first data information is 8 bits, and the first data information $B_{LB}$ may be represented as $B_{LB} = [b_0, b_1, b_2, b_3, b_4, b_5, b_6, b_7]$.

In f2, the first data information $B_{LB}$ is divided into two data blocks (Blocks), where each Block includes 4-bit data information in the first data information $B_{LB}$.

It can be understood that, the above Block is the first sub-data information in the Manner 3.

Exemplarily, assume that data information included in the Block with index i may be represented as $E_{L_i^E} = \left[ e_0, e_1, e_2, e_3, \cdots, e_{L_i^E - 1} \right]$ , and the length is $L_i^E$ bits. In the present embodiment, a first Block may be represented as $E_{L_0^E} = [b_0, b_1, b_2, b_3]$ , and a second block may be represented as $E_{L_1^E} = [b_4, b_5, b_6, b_7]$ .

In some embodiments, data information ( $E_{L_i^E}$ ) in a Block is transmitted in an OFDM symbol.

In some embodiments, $E_{L_i^E}$ may be carried by sequences. Exemplarily, in the embodiments of the present disclosure, a length of the data information in each Block is 4 bits, so $4^2=16$ sequences may be used to carry different values of $E_{L_i^E}$ .

In f3, for the data information $E_{L_i^E}$ in each Block, the data information $E_{L_i^E}$ is repeated for R1 times, to obtain second data information $H_{L_i^H}$ , where R1 is a positive integer.

Exemplarily, if the above R1 is equal to 4, then the second data information $H_{L_i^H}$ may be represented as $H_{L_i^H} = \underbrace{\left[ E_{L_i^E}, E_{L_i^E}, E_{L_i^E}, E_{L_i^E} \right]}_{4}$ , $H_{L_i^H} = \underbrace{\left[ E_{L_i^E}, E_{L_i^E}, E_{L_i^E}, E_{L_i^E} \right]}_{4}$ includes $H_{L_0^H} = \underbrace{\left[ E_{L_0^E}, E_{L_0^E}, E_{L_0^E}, E_{L_0^E} \right]}_{4}$ and $H_{L_1^H} = \underbrace{\left[ E_{L_1^E}, E_{L_1^E}, E_{L_1^E}, E_{L_1^E} \right]}_{4}$ .

In f4, the second data information $H_{L_i^H}$ is repeated for R2 times, to obtain fifth data information $R_{L_i^R}$ .

Exemplarily, if the above R2 is equal to 2, then the fifth data information $R_{L_i^R}$ may be represented as $R_{L_i^R} = \underbrace{\left[ H_{L_i^H}, H_{L_i^H} \right]}_{2}$ , and $R_{L_i^R} = \underbrace{\left[ H_{L_i^H}, H_{L_i^H} \right]}_{2}$ includes $R_{L_0^R} = \underbrace{\left[ H_{L_0^H}, H_{L_0^H} \right]}_{2}$ and $R_{L_1^R} = \underbrace{\left[ H_{L_1^H}, H_{L_1^H} \right]}_{2}$ .

In f5, the fifth data information is carried in the LP-WUS signal for transmission.

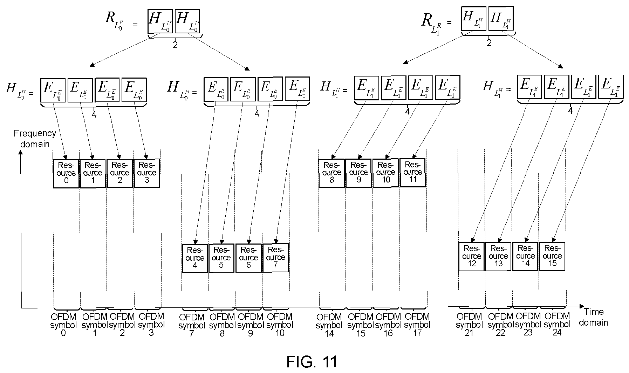

Exemplarily, as shown in FIG. 11, a first $H_{L_0^H}$ in $R_{L_0^R}$ is transmitted in 4 OFDM symbols, and occupies resource 0, resource 1, resource 2 and resource 3, respectively. The resource 0 is in the OFDM symbol 0, the resource 1 is in the OFDM symbol 1, the resource 2 is in the OFDM symbol 2, and the resource 3 is in the OFDM symbol 3. The frequency-domain resource positions occupied by the 4 resources in the 4 OFDM symbols may be the same. A second $H_{L_0^H}$ in $R_{L_0^R}$ is transmitted in 4 OFDM symbols, and occupies resource 4, resource 5, resource 6 and resource 7, respectively. The resource 4 is in the OFDM symbol 4, the resource 5 is in the OFDM symbol 5, the resource 6 is in the OFDM symbol 6, and the resource 7 is in the OFDM symbol 7. The frequency-domain resource positions occupied by the 4 resources in the 4 OFDM symbols may be the same, but different from the frequency-domain resource positions occupied by the first $H_{L_0^H}$ in $R_{L_0^R}$.

A first $H_{L_1^H}$ in $R_{L_1^R}$ is transmitted in 4 OFDM symbols, and occupies resource 8, resource 9, resource 10 and resource 11, respectively. The resource 8 is in OFDM symbol 14, the resource 9 is in OFDM symbol 15, the resource 10 is in OFDM symbol 16, and the resource 11 is in OFDM symbol 17. The frequency-domain resource positions occupied by the 4 resources in the 4 OFDM symbols may be the same. The second $H_{L_1^H}$ in $R_{L_1^R}$ is transmitted in 4 OFDM symbols, and occupies resource 12, resource 13, resource 14 and resource 15, respectively. The resource 12 is in OFDM symbol 21, the resource 13 is in OFDM symbol 22, the resource 14 is in OFDM symbol 23, and the resource 15 is in OFDM symbol 24. The frequency-domain resource positions occupied by the 4 resources in the 4 OFDM symbols may be the same, but different from the frequency-domain resource positions occupied by the first $H_{L_1^H}$ in $R_{L_1^R}$.

Scenario 2: the first signal carries sixth data information. First, the second data information is generated based on the above Manner 3, further seventh data information is constructed with at least one piece of second data information, and the seventh data information is repeated for R3 times to, obtain the sixth data information.

Exemplarily, in Scenario 2, the signal sending method provided by the embodiments of the present disclosure may be implemented as g1 to g6.

In g1, first data information is constructed.

A length $L^B$ of the first data information is 8 bits, and the first data information $B_{LB}$ may be represented as $B_{LB}$ = [$b_0$, $b_1$,$b_2$,$b_3$,$b_4$,$b_5$,$b_6$,$b_7$ ].

In g2, the first data information $B_{LB}$ is divided into two Blocks, where each Block includes 4-bit data information in the first data information $B_{LB}$.

Exemplarily, the first Block may be represented as $E_{L_0^E} = \begin{bmatrix} b_0,b_1,b_2,b_3 \end{bmatrix}$, and the second Block may be represented as $E_{L_1^E} = \begin{bmatrix} b_4,b_5,b_6,b_7 \end{bmatrix}$.

In some embodiments, the data information ( $E_{L_i^E}$ ) in a Block is transmitted in an OFDM symbol.

In some embodiments, $E_{L_i^E}$ may be carried by sequences. Exemplarily, in the embodiments of the present disclosure, a length of the data information in each Block is 4 bits, so $4^2$=16 sequences may be used to carry different values of $E_{L_i^E}$.

In g3, for the data information $E_{L_i^E}$ in each Block, the data information $E_{L_i^E}$ is repeated for R1 times, to obtain second data information $H_{L_i^H}$, where R1 is a positive integer.

Exemplarily, if the above R1 is equal to 4, then the above second data information $H_{L_i^H}$ may be represented as

$$H_{L_0^H} = \underbrace{\begin{bmatrix} E_{L_0^E},E_{L_0^E},E_{L_0^E},E_{L_0^E} \end{bmatrix}}_{4} \text{ and } H_{L_1^H} = \underbrace{\begin{bmatrix} E_{L_1^E},E_{L_1^E},E_{L_1^E},E_{L_1^E} \end{bmatrix}}_{4}.$$

In g4, the seventh data information $P_{LP}$ is constructed by combining at least one piece of second data information $H_{L_i^H}$.

Exemplarily, the above seventh data information $P_{LP}$ may be represented as $P_{LP} = \begin{bmatrix} H_{L_0^H},H_{L_1^H} \end{bmatrix}$.

In g5, the seventh data information $P_{LP}$ is repeated for R3 times, to obtain sixth data information $X_{LX}$, where R3 is a positive integer.

Exemplarily, if the above R3 may be 2, then the sixth data information $X_{LX}$ may be represented as

$$X_{L^X} = \underbrace{\left[ P_{L^P}, P_{L^P} \right]}_{2}.$$

In g6, the sixth data information is carried in the LP-WUS signal for transmission.

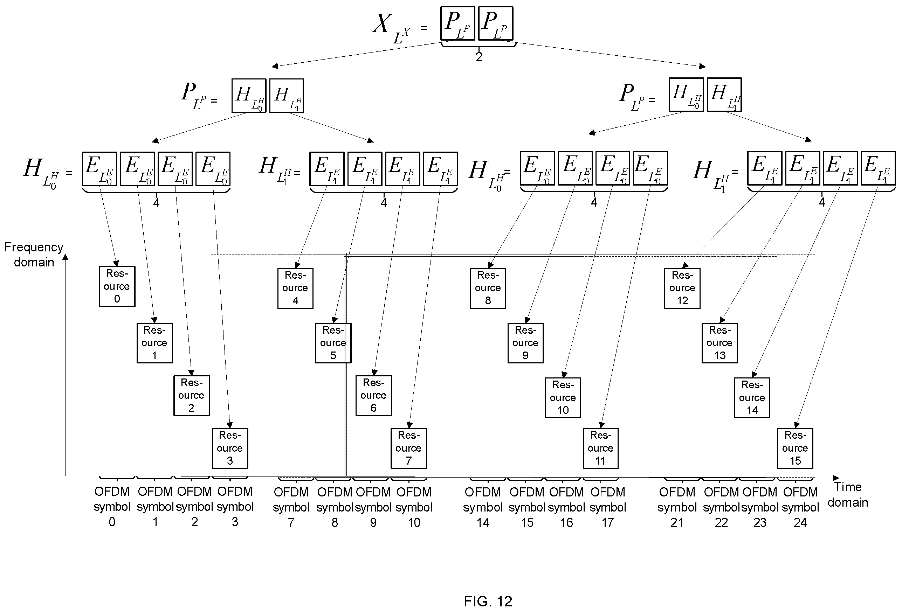

Exemplarily, as shown in FIG. 12, $H_{L_0^H}$ in a first $P_{LP}$ of the sixth data information $X_{LX}$ is transmitted in 4 OFDM symbols, and occupies resource 0, resource 1, resource 2 and resource 3, respectively. The resource 0 is in the OFDM symbol 0, the resource 1 is in the OFDM symbol 1, the resource 2 is in the OFDM symbol 2, and the resource 3 is in the OFDM symbol 3. The frequency-domain resource positions occupied by the 4 resources in the 4 OFDM symbols may be determined according to frequency-domain frequency hopping rules. $H_{L_1^H}$ is transmitted in 4 OFDM symbols, and occupies resource 4, resource 5, resource 6 and resource 7, respectively. The resource 4 is in the OFDM symbol 4, the resource 5 is in the OFDM symbol 5, the resource 6 is in the OFDM symbol 6, and the resource 7 is in the OFDM symbol 7. The frequency-domain resource positions occupied by the 4 resources in the 4 OFDM symbols may be determined according to frequency-domain frequency hopping rules. $H_{L_0^H}$ in a second $P_{LP}$ of the sixth data information $X_{LX}$ is transmitted in 4 OFDM symbols, and occupies resource 8, resource 9, resource 10 and resource 11, respectively. The resource 8 is in OFDM symbol 14, the resource 9 is in OFDM symbol 15, the resource 10 is in OFDM symbol 16, and the resource 11 is in OFDM symbol 17. The frequency-domain resource positions occupied by the 4 resources in the 4 OFDM symbols may be determined according to frequency-domain frequency hopping rules. $H_{L_1^H}$ in a second $P_{LP}$ is transmitted in 4 OFDM symbols, and occupies resource 12, resource 13, resource 14 and resource 15 respectively. The resource 12 is in OFDM symbol 21, the resource 13 is in OFDM symbol 22, the resource 14 is in OFDM symbol 23, and the resource 15 is in OFDM symbol 24. The frequency-domain resource positions occupied by the 4 resources in the 4 OFDM symbols may be determined according to frequency-domain frequency hopping rules.

In some embodiments, for $H_{L_0^H}$ in the first $P_{LP}$ and $H_{L_0^H}$ in the second $P_{LP}$, the same frequency hopping rules may be adopted; or, respective frequency hopping rules may be independently configured.

Exemplarily, if a same frequency hopping rule is adopted for $H_{L_0^H}$ in the first $P_{LP}$ and $H_{L_0^H}$ in the second $P_{LP}$, then frequency resource positions occupied by the resource 0 and the resource 8 are the same, frequency resource positions occupied by the resource 1 and the resource 9 are the same, frequency resource positions occupied by the resource 2 and the resource 10 are the same, and frequency resource positions occupied by the resource 3 and the resource 11 are the same.

Exemplarily, if a same frequency hopping rule is adopted for $H_{L_0^H}$ in the first $P_{LP}$ and $H_{L_0^H}$ in the second $P_{LP}$, then a frequency resource interval size between the resource 0 and the resource 1 is the same as a frequency resource interval size between the resource 8 and the resource 9, a frequency resource interval size between the resource 1 and the resource 2 is the same as a frequency resource interval size between the resource 9 and the resource 10, and a frequency resource interval size between the resource 2 and the resource 3 is the same as a frequency resource interval size between the resource 10 and the resource 11. Further, the frequency resource positions occupied by the resource 0 and the resource 8 may be the same or different.

In some embodiments, for $H_{L_1^H}$ in the first $P_{LP}$ and $H_{L_1^H}$ in the second $P_{LP}$, the same frequency hopping rule may be adopted; or, respective frequency hopping rules may be independently configured.

Exemplarily, if the same frequency hopping rule is adopted for $H_{L_1^H}$ in the first $P_{LP}$ and $H_{L_1^H}$ in the second $P_{LP}$, then the frequency resource positions occupied by the resource 4 and the resource 12 are the same, the frequency resource positions occupied by the resource 5 and the resource 13 are the same, the frequency resource positions occupied by the resource 6 and the resource 14 are the same, and the frequency resource positions occupied by the resource 7 and the resource 15 are the same.

Exemplarily, if the same frequency hopping rule is adopted for $H_{L_1^H}$ in the first $P_{LP}$ and $H_{L_1^H}$ in the second $P_{LP}$, then a frequency resource interval size between the resource 4 and the resource 5 is the same as a frequency resource interval size between the resource 12 and the resource 13, a frequency resource interval size between the resource 5 and the resource 6 is the same as a frequency resource interval size between the resource 13 and the resource 14, and a frequency resource interval size between the resource 6 and the resource 7 is the same as a frequency resource interval size between the resource 14 and the resource 15. Further, the frequency resource positions occupied by the resource 4 and the resource 12 may be the same or different.

Scenario 3: the first signal carries sixth data information. First, the second data information is generated based on the above Manner 4, further seventh data information is constructed with at least one piece of second data information, and the seventh data information is repeated for R3 times, to obtain the sixth data information.

Exemplarily, in Scenario 3, the signal sending method provided by the embodiments of the present disclosure may be implemented as h1 to h6.

In h1, first data information is constructed.

A length $L^B$ of the first data information is 16 bits, and the first data information $B_{LB}$ may be represented as $B_{LB} = [b_0,b_1,b_2,b_3,b_4,b_5,b_6,b_7,b_8,b_9,b_{10},b_{11},b_{12},b_{13},b_{14},b_{15}]$. $b_0,b_1,b_2,b_3,b_4,b_5,b_6,b_7$ are source information bits, and $b_8,b_9,b_{10}, b_{11},b_{12},b_{13},b_{14},b_{15}$ are CRC bits.

In h2, Manchester coding is performed on each bit $b_i$ in the first data information $B_{LB}$, to obtain fourth data information $C_{L_i^C}^i$.

Exemplarily, a code rate of Manchester coding is 1/4. When $b_i$ in the first data information $B_{LB}$ is equal to 0, data information $C_{L_i^C}^i$ generated by $b_i$ through Manchester coding is [1 0 1 0]. When $b_i$ in the first data information $B_{LB}$ is equal to 1, data information $C_{L_i^C}^i$ generated by $b_i$ through Manchester coding is [0 1 0 1].

Exemplarily, the fourth data information $C_{L_i^C}^i$ generated by each bit $b_i$ in the first data information $B_{LB}$ through Manchester coding may be represented as $C_{L^C} = \left[ C_{L_0^C}^0, C_{L_1^C}^1, C_{L_2^C}^2, \cdots, C_{L_{15}^C}^{15} \right]$. The data Information $C_{L_i^C}^i$ is equal to $\left[ c_0^i, c_1^i, c_2^i, \cdots, c_3^i \right]$ and the length is 4 bits.

In h3, the data information $C_{L_i^C}^i$ is repeated for R1 times, to obtain second data information, where R1 is a positive integer.

Exemplarily, if the above R1 may be 2, then the second data information $H_{L_i^H}$ may be represented as $H_{L_i^H} = \underbrace{\left[ C_{L_i^C}^i, C_{L_i^C}^i \right]}_{2}$.

In h4, seventh data information $P_{LP}$ is constructed by combining different pieces of second data information $H_{L_i^H}$.

Exemplarily, $P_{LP}$ may be represented as $P_{LP} = \left[ H_{L_0^H}, H_{L_1^H}, H_{L_2^H}, \cdots, H_{L_{15}^H} \right]$.

In h5, the seventh data information $P_{LP}$ is repeated for R3 times, to obtain sixth data information $X_{LX}$.

Exemplarily, if the above R3 may be 2,, then the sixth data information $X_{LX}$ may be represented as $X_{LX} = \underbrace{\left[ P_{LP}, P_{LP} \right]}_{2}$.

Exemplarily, the frequency-domain resource positions occupied by the R3 pieces of seventh data information $P_{LP}$ in the OFDM symbols maybe configured.

In h6, the sixth data information $X_{LX}$ is carried in the MC-OOK based LP-WUS symbol for transmission.

Exemplarily, resources occupied by M (exemplarily, M is equal to 8) MC-OOK based LP-WUS symbols are included in an OFDM symbol. Time-domain expressions of the M OOK symbols may be generated by the methods provided in the above e1 to e6.

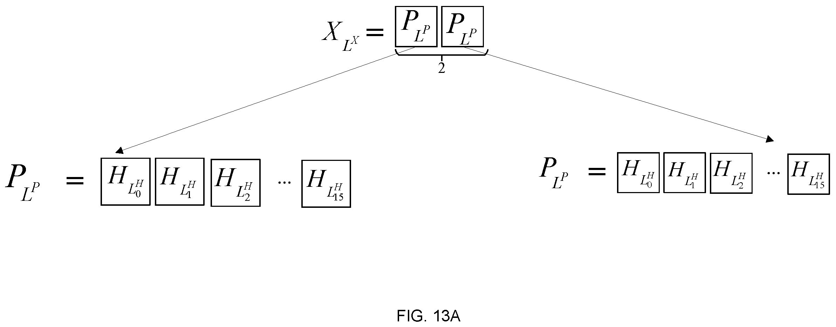

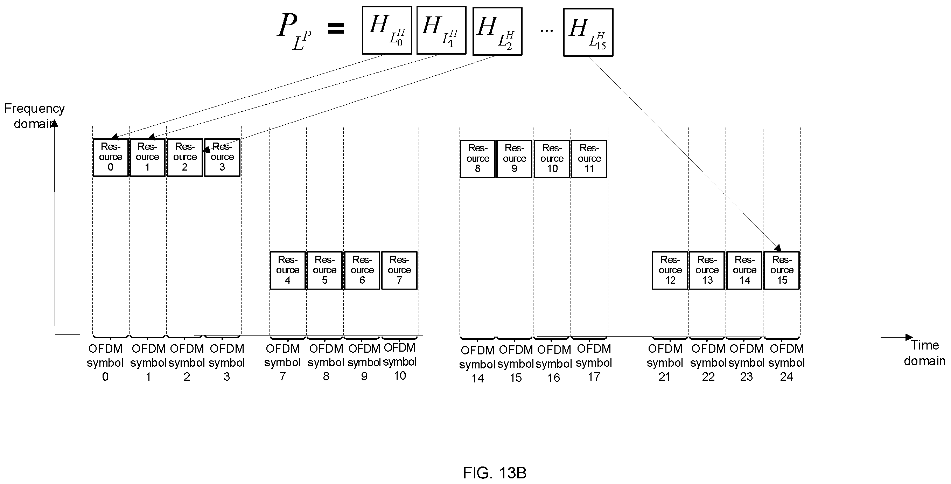

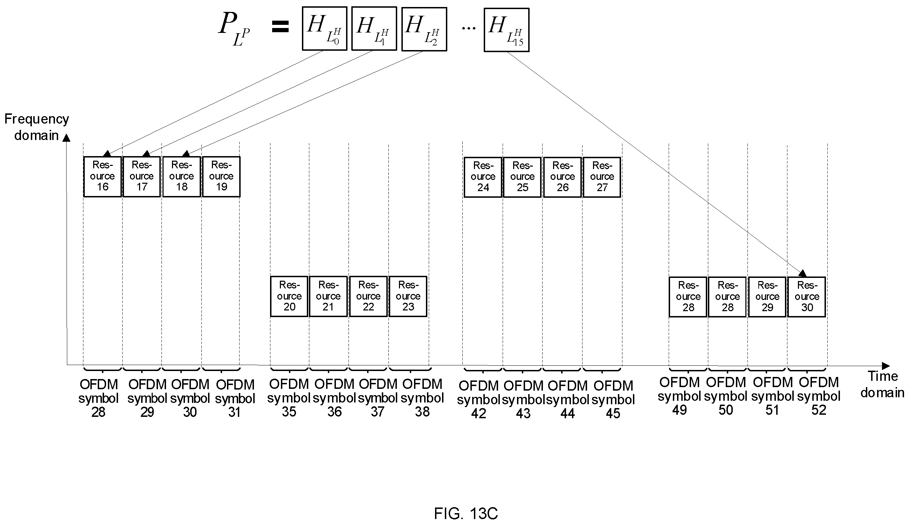

Exemplarily, in accordance with the data information sent on the M OOK symbols in the above e1 being $S_M$, $S_M = [s_0,s_1,s_2,s_3,\cdots,s_{M-1}]$ is defined, and a length is M= 8. As shown in FIG. 13, in the embodiments of the present disclosure, the data information sent on the resource 0 in the OFDM symbol 0 is $H_{L_0^H}$, i.e., $S_M = H_{L_0^H}$, and then time-domain expressions of the M=8 OOK symbols are generated according to the above e1 to e6.

The data information sent on the resource 1 in the OFDM symbol 1 is $H_{L_1^H}$, i.e., $S_M = H_{L_1^H}$, and then the time-domain expressions of the M=8 OOK symbols are generated according to the above e1 to e6.

And so on, the data information sent on the resource 15 in the OFDM symbol 24 is $H_{L_{15}^H}$, i.e., $S_M = H_{L_{15}^H}$, and then the time-domain expressions of the M=8 OOK symbols are generated according to the above e1 to e6.

And so on, the data information sent on the resource 16 in the OFDM symbol 28 is $H_{L_0^H}$, i.e., $S_M = H_{L_0^H}$, and then the time-domain expressions of the M=8 OOK symbols are generated according to the above e1 to e6.

And so on, the data information sent on the resource 17 in the OFDM symbol 29 is $H_{L_1^H}$, i.e., $S_M = H_{L_1^H}$, and then the time-domain expressions of the M=8 OOK symbols are generated according to the above e1 to e6.

And so on, the data information sent on the resource 31 in the OFDM symbol 52 is $H_{L_1^H}$, i.e., $S_M = H_{L_1^H}$, and then the time-domain expressions of the M=8 OOK symbols are generated according to the above e1 to e6.

It can be understood that, the three scenarios provided in the above embodiments are merely examples. In some other embodiments, the signal sending method provided in the embodiments of the present disclosure may also be applied to other scenarios, which is not limited to the present disclosure.

It should be noted that, the above Scenario 1, Scenario 2 and Scenario 3 do not necessarily need to be performed independently. For example, Scenario 1 and Scenario 3 may be implemented simultaneously; or, Scenario 2 and Scenario 3 may be performed simultaneously.

The above introduces the solutions of the embodiments of the present disclosure mainly from the perspective of methods. It may be understood that in order to achieve the functions mentioned above, a signal sending apparatus and a sending receiving apparatus contain at least one of corresponding hardware structures or software modules for performing respective functions. Those skilled in the art should easily realize that the embodiments of the present disclosure may be implemented in the form of hardware or a combination of hardware and computer software, in combination with the units and algorithm steps of various examples described in the embodiments disclosed herein. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the embodiments of the present disclosure.

It can be understood that, the signal sending apparatus and the sending receiving apparatus contain the corresponding hardware structures and/or software modules for performing various functions in order to implement the above functions. Those skilled in the art should easily recognize that the present disclosure can be implemented in the form of hardware or a combination of hardware and computer software, in conjunction with the algorithm steps of various examples described in the embodiments of the present disclosure. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the present disclosure.

In the embodiments of the present disclosure, the signal sending apparatus and the sending receiving apparatus may be divided into functional modules according to the above-mentioned method embodiments, and for example, each functional module may be divided corresponding to each function, or two or more functions may be integrated into one functional module. The above integrated module is implemented in the form of hardware or in the form of software. It should be noted that, the division of the modules in the embodiments of the present disclosure is schematic, which is only a logical functional division, and there may be other divisions in actual implementations. The example in which each functional module is divided corresponding to each function, is taken for explanation below.

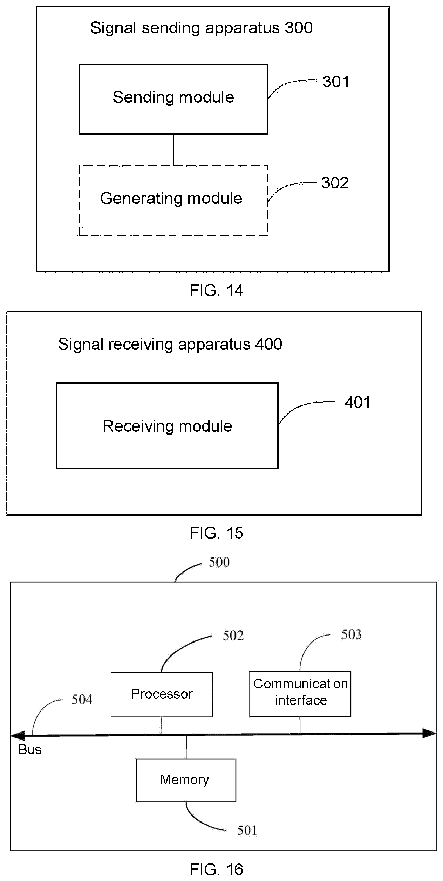

FIG. 14 is a structural schematic diagram of a signal sending apparatus, provided in the embodiments of the present disclosure, and the signal sending apparatus , is configured to perform the signal sending method provided in the above method embodiments. As shown in FIG. 14, the signal sending apparatus 300 includes: a sending module 301. In some other embodiments, the signal sending apparatus 300 further includes a generating module 302.

The sending module 301, is configured to send a first signal, where the first signal carries first data information, and the first signal occupies at least one time-domain symbol in time domain.

In some embodiments, the first data information includes at least one of: source information, a cyclic redundancy check (CRC) bit, or a padding bit.

In some embodiments, the time-domain symbol includes any one of: an OOK symbol, an MC-OOK symbol, an FSK symbol, an MC-FSK symbol, an OFDM symbol.

In some embodiments, the first signal carrying the first data information includes: the first signal carrying at least one piece of second data information generated from the first data information.

In some embodiments, the second data information includes at least one piece of second sub-data information; and each piece of second sub-data information is carried in at least one time-domain symbol for transmission.

In some embodiments, frequency-domain resource positions occupied by time-frequency resources corresponding to each piece of second sub-data information in frequency domain are the same; or frequency-domain resources occupied by time-frequency resources corresponding to each piece of second sub-data information in frequency domain are independently configured; or frequency-domain resource positions occupied by time-frequency resources corresponding to each piece of second sub-data information are indicated through information

In some embodiments, the generating module 302, is configured to generate the second data information by: performing a first operation on the first data information, to obtain third data information; dividing the third data information into at least one piece of third sub-data information; and for each piece of third sub-data information, repeating the third sub-data information for R1 times, to obtain the second data information, where R1 is a positive integer.

In some embodiments, the generating module 302, is further configured to generate the second data information by: performing a first operation on the first data information, to obtain third data information; and repeating the third data information for R1 times, to obtain the second data information, where R1 is a positive integer.

In some embodiments, the generating module 302, is further configured to generate the second data information by: dividing the first data information into at least one piece of first sub-data information; and for each piece of first sub-data information, repeating the first sub-data information for R1 times, to obtain the second data information, where R1 is a positive integer

In some embodiments, the generating module 302, is further configured to generate second data information by: for each bit in the first data information, performing a first operation on the bit, to obtain fourth data information; and repeating the fourth data information for R1 times, to obtain the second data information, where R1 is a positive integer

In some embodiments, a data element in the second data information corresponds to a sequence; where sequences corresponding to respective data elements in the second data information are the same; or sequences corresponding to data elements with a value of 1 in the second data information are the same; or sequences corresponding to data elements with a same position in pieces of fourth data information that is repeated for R1 times in the second data information are the same.

In some embodiments, the first operation includes at least one of: bit-level repetition, coding, modulation, interleaving, adding a padding bit, or adding a CRC bit.

In some embodiments, the first signal carrying at least one piece of second data information includes: the first signal carrying at least one piece of fifth data information, where each piece of fifth data information is obtained by repeating second data information for R2 times, and R2 is a positive integer.

In some embodiments, in a piece of the fifth data information, frequency-domain resource positions occupied by time-frequency resources corresponding to each piece of second data information in frequency domain are the same; or frequency-domain resource positions occupied by time-frequency resources corresponding to each piece of second data information in frequency domain are independently configured; or frequency-domain resource positions occupied by time-frequency resources corresponding to each piece of second data information are indicated through information.

In some embodiments, the first signal carrying at least one piece of second data information includes: the first signal carrying sixth data information, where the sixth data information is obtained by repeating seventh data information for R3 times, the seventh data information consists of the at least one piece of second data information, and R3 is a positive integer.

In some embodiments, in a piece of the sixth data information, frequency-domain resource positions occupied by time-frequency resources corresponding to each piece of seventh data information in frequency domain are the same; or frequency-domain resource positions occupied by time-frequency resources corresponding to each piece of seventh data information in frequency domain are independently configured; or frequency-domain resource positions occupied by time-frequency resources corresponding to each piece of seventh data information are indicated through information.

FIG. 15 is a structural schematic diagram of a signal receiving apparatus, provided in the embodiments of the present disclosure, and the signal sending apparatus, is configured to perform the signal receiving method provided in the above method embodiments. As shown in FIG. 15, the signal receiving apparatus 400 includes: a receiving module 401.

The receiving module 401, is configured to receive a first signal, where the first signal carries first data information, and the first signal occupies at least one time-domain symbol in time domain

In some embodiments, the first signal carrying the first data information includes: the first signal carrying at least one piece of second data information generated from the first data information.

In some embodiments, the second data information includes at least one piece of second sub-data information; and each piece of second sub-data information is carried in at least one time-domain symbol for transmission.

In some embodiments, frequency-domain resource positions occupied by time-frequency resources corresponding to each piece of second sub-data information in frequency domain are the same; or frequency-domain resources occupied by time-frequency resources corresponding to each piece of second sub-data information in frequency domain are independently configured; or frequency-domain resource positions occupied by time-frequency resources corresponding to each piece of second sub-data information are indicated through information

In some embodiments, the first signal carrying at least one piece of second data information includes: the first signal carrying at least one piece of fifth data information, where each piece of fifth data information is obtained by repeating second data information for R2 times, and R2 is a positive integer.

In some embodiments, in a piece of the fifth data information, frequency-domain resource positions occupied by time-frequency resources corresponding to each piece of second data information in frequency domain are the same; or frequency-domain resource positions occupied by time-frequency resources corresponding to each piece of second data information in frequency domain are independently configured; or frequency-domain resource positions occupied by time-frequency resources corresponding to each piece of second data information are indicated through information.

In some embodiments, the first signal carrying at least one piece of second data information includes: the first signal carrying sixth data information, where the sixth data information is obtained by repeating seventh data information for R3 times, the seventh data information consists of the at least one piece of second data information, and R3 is a positive integer.

In some embodiments, in a piece of the sixth data information, frequency-domain resource positions occupied by time-frequency resources corresponding to each piece of seventh data information in frequency domain are the same; or frequency-domain resource positions occupied by time-frequency resources corresponding to each piece of seventh data information in frequency domain are independently configured; or frequency-domain resource positions occupied by time-frequency resources corresponding to each piece of seventh data information are indicated through information.

In a case where the functions of the above integrated modules are implemented in the form of hardware, the embodiments of the present disclosure provide a structure of the communication apparatus involved in the above embodiments. As shown in FIG. 16, the communication apparatus 500 includes a processor 502 and a bus 504. In some embodiments, the communication apparatus 500 may further include a memory 501; in some embodiments, the communication apparatus 500 may further include a communication interface503.

The processor 502 may implement or perform various exemplary logical blocks, modules and circuits described in conjunction with the embodiments of the present disclosure. The processor 502 may be a central processing unit, a general-purpose processor, a digital signal processor, an application specific integrated circuit, a field programmable gate array or other programmable logic devices, a transistor logic device, a hardware component or any combination thereof. The processor 502 may implement or perform various exemplary logical blocks, modules and circuits described in conjunction with the embodiments of the present disclosure. The processor 502 may also be a combination that implements computing functions, for example, including a combination of one or more microprocessors, a combination of a digital signal processor (DSP) and a microprocessor, or the like.

The communication interface 503 is configured to connect with other devices via a communication network. The communication network may be an Ethernet, a radio access network, a wireless local area network (WLAN), or the like.

The memory 501 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 501 may exist independently of the processor 502, and the memory 501 may be connected to the processor 502 via the bus 504 and is used for storing instructions or program codes. The processor 502, when calling and executing the instructions or program codes stored in the memory 501, is capable of implementing the signal sending method and the signal receiving method provided in the embodiments of the present disclosure.

As another implementation, the memory 501 may be integrated with the processor 502.

The bus 504 may be an extended industry standard architecture (EISA) bus or the like. Buses 504 may be divided into address buses, data buses, control buses, and the like. For the convenience of representation, only one thick line is used in FIG. 16 for representation, but it does not mean that there is only one bus or one type of bus.

Some embodiments of the present disclosure provide a computer readable storage medium (for example, a non-transitory computer readable storage medium), the computer readable storage medium has stored computer program instructions thereon, and the computer program instructions, when executed on a computer, cause the computer to perform the signal sending method and the signal receiving method in any one of the above embodiments.

Exemplarily, the above-mentioned computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage media described in the present disclosure may represent one or more devices for storing information and/or other machine readable storage media for storing information. The term "machine readable storage medium" may include, but be not limited to, a radio channel and various other media capable of storing, containing, and/or carrying instructions and/or data.

The embodiments of the present disclosure provide a computer program product containing instructions, and the computer program product, when executed on a computer, causes the computer to perform the signal sending method and the signal receiving method in any one of the above embodiments.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined based on the protection scope of the claims.

**Claims**

1. A signal sending method, **characterized by** comprising:
sending a first signal, wherein the first signal carries first data information, and the first signal occupies at least one time-domain symbol in time domain.

2. The method according to claim 1, wherein the first data information comprises at least one of: source information, a cyclic redundancy check (CRC) bit, or a padding bit.

3. The method according to claim 1, wherein the time-domain symbol comprises any one of: an OOK symbol, an MC-OOK symbol, an FSK symbol, an MC-FSK symbol, an OFDM symbol.

4. The method according to claim 1, wherein the first signal carrying the first data information comprises: the first signal carrying at least one piece of second data information generated from the first data information.

5. The method according to claim 4, wherein the second data information comprises at least one piece of second sub-data information; and each piece of second sub-data information is carried in at least one time-domain symbol for transmission.

6. The method according to claim 5, wherein

   frequency-domain resource positions occupied by time-frequency resources corresponding to each piece of second sub-data information in frequency domain are the same; or
   frequency-domain resources occupied by time-frequency resources corresponding to each piece of second sub-data information in frequency domain are independently configured; or
   frequency-domain resource positions occupied by time-frequency resources corresponding to each piece of second sub-data information are indicated through information.

7. The method according to claim 4, wherein the second data information is generated by:

   performing a first operation on the first data information, to obtain third data information;
   dividing the third data information into at least one piece of third sub-data information; and
   for each piece of third sub-data information, repeating the third sub-data information for R1 times, to obtain the second data information, wherein R1 is a positive integer.

8. The method according to claim 4, wherein the second data information is generated by:

   performing a first operation on the first data information, to obtain third data information; and
   repeating the third data information for R1 times, to obtain the second data information, wherein R1 is a positive integer.

9. The method according to claim 4, wherein the second data information is generated by:

   dividing the first data information into at least one piece of first sub-data information; and
   for each piece of first sub-data information, repeating the first sub-data information for R1 times, to obtain the second data information, wherein R1 is a positive integer.

10. The method according to claim 4, wherein the second data information is generated by:

    for each bit in the first data information, performing a first operation on the bit, to obtain fourth data information; and
    repeating the fourth data information for R1 times, to obtain the second data information, wherein R1 is a positive integer.

11. The method according to claim 9 or 10, wherein a data element in the second data information corresponds to a sequence;

wherein sequences corresponding to respective data elements in the second data information are the same; or sequences corresponding to data elements with a value of 1 in the second data information are the same; or sequences corresponding to data elements with a same position in pieces of fourth data information that are repeated for R1 times in the second data information are the same.

12. The method according to any one of claims 7, 8, and 10, wherein the first operation comprises at least one of: bit-level repetition, coding, modulation, interleaving, adding a padding bit, or adding a CRC bit.

13. The method according to claim 4, wherein the first signal carrying at least one piece of second data information comprises: the first signal carrying at least one piece of fifth data information, wherein each piece of fifth data information is obtained by repeating second data information for R2 times, and R2 is a positive integer.

14. The method according to claim 13, wherein in a piece of the fifth data information, frequency-domain resource positions occupied by time-frequency resources corresponding to each piece of second data information in frequency domain are the same; or frequency-domain resource positions occupied by time-frequency resources corresponding to each piece of second data information in frequency domain are independently configured; or frequency-domain resource positions occupied by time-frequency resources corresponding to each piece of second data information are indicated through information.

15. The method according to claim 4, wherein the first signal carrying at least one piece of second data information comprises: the first signal carrying sixth data information, wherein the sixth data information is obtained by repeating seventh data information for R3 times, the seventh data information consists of the at least one piece of second data information, and R3 is a positive integer.

16. The method according to claim 15, wherein in a piece of the sixth data information, frequency-domain resource positions occupied by time-frequency resources corresponding to each piece of seventh data information in frequency domain are the same; or frequency-domain resource positions occupied by time-frequency resources corresponding to each piece of seventh data information in frequency domain are independently configured; or frequency-domain resource positions occupied by time-frequency resources corresponding to each piece of seventh data information are indicated through information.

17. A signal receiving method, **characterized by** comprising:
receiving a first signal, wherein the first signal carries first data information, and the first signal occupies at least one time-domain symbol in time domain.

18. The method according to claim 17, wherein the first signal carrying the first data information comprises: the first signal carrying at least one piece of second data information generated from the first data information.

19. The method according to claim 18, wherein the second data information comprises at least one piece of second sub-data information; and each piece of second sub-data information is carried in at least one time-domain symbol for transmission.

20. The method according to claim 19, wherein

frequency-domain resource positions occupied by time-frequency resources corresponding to each piece of second sub-data information in frequency domain are the same; or
frequency-domain resources occupied by time-frequency resources corresponding to each piece of second sub-data information in frequency domain are independently configured; or
frequency-domain resource positions occupied by time-frequency resources corresponding to each piece of second sub-data information are indicated through information.

21. The method according to claim 18, wherein the first signal carrying at least one piece of second data information comprises: the first signal carrying at least one piece of fifth data information, wherein each piece of fifth data information is obtained by repeating second data information for R2 times, and R2 is a positive integer.

22. The method according to claim 21, wherein in a piece of the fifth data information, frequency-domain resource positions occupied by time-frequency resources corresponding to each piece of second data information in frequency domain are the same; or frequency-domain resource positions occupied by time-frequency resources corresponding to each piece of second data information in frequency domain are independently configured; or frequency-domain resource positions occupied by time-frequency resources corresponding to each piece of second data information are indicated through information.

23. The method according to claim 18, wherein the first signal carrying at least one piece of second data information comprises: the first signal carrying sixth data information, wherein the sixth data information is obtained by repeating seventh data information for R3 times, the seventh data information consists of the at least one piece of second data information, and R3 is a positive integer.

24. The method according to claim 23, wherein in a piece of the sixth data information, frequency-domain resource positions occupied by time-frequency resources corresponding to each piece of seventh data information in frequency domain are the same; or frequency-domain resource positions occupied by time-frequency resources corresponding to each piece of seventh data information in frequency domain are independently configured; or frequency-domain resource positions occupied by time-frequency resources corresponding to each piece of seventh data information are indicated through information.

25. A communication apparatus, **characterized by** comprising: a memory and a processor; wherein the memory is coupled with the processor; the memory is configured to store instructions executable by the processor; and the processor, when executing the instructions, performs the method according to any one of claims 1 to 24.

26. A computer readable storage medium, **characterized in that** the computer readable storage medium has stored computer instructions thereon, and the computer instructions, when executed on an electronic device, cause the electronic device to perform the method according to any one of claims 1 to 24.

FIG. 1

FIG. 2

FIG. 3

$$H_{I_i^H} = \boxed{E_{I_i^E}} \quad \boxed{E_{I_i^E}} \quad \boxed{E_{I_i^E}} \quad \boxed{E_{I_i^E}}$$

4

Frequency domain

Resource 0

Resource 1

Resource 2

Resource 3

OFDM symbol 0

OFDM symbol 1

OFDM symbol 2

OFDM symbol 3

Time domain

FIG. 4

$$H_{L_i^H} = \underbrace{\left(c_0^i, c_1^i, \cdots, \; c_{L_i^C-1}^i\right) \left(c_0^i, c_1^i, \cdots, \; c_{L_i^C-1}^i\right) \left(c_0^i, c_1^i, \cdots, \; c_{L_i^C-1}^i\right) \left(c_0^i, c_1^i, \cdots, \; c_{L_i^C-1}^i\right)}_{4}$$

Frequency domain

| Resour-ce 0 | Resour-ce 1 | Resour-ce 2 | Resour-ce 3 |

OFDM symbol 0    OFDM symbol 1    OFDM symbol 2    OFDM symbol 3    Time domain

FIG. 5

$$H_{L_i^H} = \left\{ \overbrace{\left(c_0^i, c_1^i, \cdots, \ c_{L_i^C-1}^i\right)}, \left(c_0^i, c_1^i, \cdots, \ c_{L_i^C-1}^i\right), \left(c_0^i, c_1^i, \cdots, \ c_{L_i^C-1}^i\right), \left(c_0^i, c_1^i, \cdots, \ c_{L_i^C-1}^i\right)\right\}_4$$

FIG. 6

$$Q_K = \left[\underbrace{w_0^0 \bullet s_0, w_0^1 \bullet s_0, \cdots, \ w_0^{A-1} \bullet s_0}_{A}\right], \left[\underbrace{w_1^0 \bullet s_1, w_1^1 \bullet s_1, \cdots, w_1^{A-1} \bullet s_1}_{A}\right], \cdots,$$
$$\left[\underbrace{w_{M-1}^0 \bullet s_{M-1}, w_{M-1}^1 \bullet s_{M-1}, \cdots, w_{M-1}^{A-1} \bullet s_{M-1}}_{A}\right]$$

$$D_K = [d_0, d_1, d_2, d_3, \cdots, \ d_{K-1}]$$

FIG. 7

FIG. 8

FIG. 9

$$H_{I_i^H} = \overbrace{\left\{\left(c_0^i, c_1^i, \cdots, c_{I_i^C-1}^i\right)\left(c_0^i, c_1^i, \cdots, c_{I_i^C-1}^i\right)\left(c_0^i, c_1^i, \cdots, c_{I_i^C-1}^i\right)\left(c_0^i, c_1^i, \cdots, c_{I_i^C-1}^i\right)\right\}}^{4} \qquad H_{I_i^H} = \overbrace{\left\{\left(c_0^i, c_1^i, \cdots, c_{I_i^C-1}^i\right)\left(c_0^i, c_1^i, \cdots, c_{I_i^C-1}^i\right)\left(c_0^i, c_1^i, \cdots, c_{I_i^C-1}^i\right)\left(c_0^i, c_1^i, \cdots, c_{I_i^C-1}^i\right)\right\}}^{4}$$

Frequency domain

| Res-ource 0 | Res-ource 1 | Res-ource 2 | Res-ource 3 |

| Res-ource 4 | Res-ource 5 | Res-ource 6 | Res-ource 7 |

Time domain

OFDM Symbol 0   OFDM Symbol 1   OFDM Symbol 2   OFDM Symbol 3    OFDM Symbol 7   OFDM Symbol 8   OFDM Symbol 9   OFDM Symbol 10

FIG. 10

$$R_{L_0^R} = \underbrace{\boxed{H_{L_0^H}}\ \boxed{H_{L_0^H}}}_{2} \qquad\qquad R_{L_1^R} = \underbrace{\boxed{H_{L_1^H}}\ \boxed{H_{L_1^H}}}_{2}$$

$$H_{L_0^H} = \underbrace{\boxed{E_{L_0^E}}\ \boxed{E_{L_0^E}}\ \boxed{E_{L_0^E}}\ \boxed{E_{L_0^E}}}_{4} \qquad H_{L_0^H} = \underbrace{\boxed{E_{L_0^E}}\ \boxed{E_{L_0^E}}\ \boxed{E_{L_0^E}}\ \boxed{E_{L_0^E}}}_{4} \qquad H_{L_1^H} = \underbrace{\boxed{E_{L_1^E}}\ \boxed{E_{L_1^E}}\ \boxed{E_{L_1^E}}\ \boxed{E_{L_1^E}}}_{4} \qquad H_{L_1^H} = \underbrace{\boxed{E_{L_1^E}}\ \boxed{E_{L_1^E}}\ \boxed{E_{L_1^E}}\ \boxed{E_{L_1^E}}}_{4}$$

Frequency domain

| Res-ource 0 | Res-ource 1 | Res-ource 2 | Res-ource 3 |

| Res-ource 4 | Res-ource 5 | Res-ource 6 | Res-ource 7 |

| Res-ource 8 | Res-ource 9 | Res-ource 10 | Res-ource 11 |

| Res-ource 12 | Res-ource 13 | Res-ource 14 | Res-ource 15 |

OFDM symbol 0 | OFDM symbol 1 | OFDM symbol 2 | OFDM symbol 3 | OFDM symbol 7 | OFDM symbol 8 | OFDM symbol 9 | OFDM symbol 10 | OFDM symbol 14 | OFDM symbol 15 | OFDM symbol 16 | OFDM symbol 17 | OFDM symbol 21 | OFDM symbol 22 | OFDM symbol 23 | OFDM symbol 24

Time domain

FIG. 11

FIG. 12

FIG. 13A

EP 4 761 164 A1

$$P_{L^P} = \begin{array}{|c|c|c|c|c|} H_{L_0^H} & H_{L_1^H} & H_{L_2^H} & \cdots & H_{L_{15}^H} \end{array}$$

Frequency domain

| Res-ource 0 | Res-ource 1 | Res-ource 2 | Res-ource 3 | | Res-ource 8 | Res-ource 9 | Res-ource 10 | Res-ource 11 |

| Res-ource 4 | Res-ource 5 | Res-ource 6 | Res-ource 7 | | Res-ource 12 | Res-ource 13 | Res-ource 14 | Res-ource 15 |

OFDM symbol 0 | OFDM symbol 1 | OFDM symbol 2 | OFDM symbol 3 | OFDM symbol 7 | OFDM symbol 8 | OFDM symbol 9 | OFDM symbol 10 | OFDM symbol 14 | OFDM symbol 15 | OFDM symbol 16 | OFDM symbol 17 | OFDM symbol 21 | OFDM symbol 22 | OFDM symbol 23 | OFDM symbol 24

Time domain

FIG. 13B

$$P_{L^P} = \begin{bmatrix} H_{L_0^H} & H_{L_1^H} & H_{L_2^H} & \cdots & H_{L_{15}^H} \end{bmatrix}$$

FIG. 13C

Signal sending apparatus 300

Sending module — 301

Generating module — 302

FIG. 14

Signal receiving apparatus 400

Receiving module — 401

FIG. 15

— 500

— 502      — 503

— 504    Processor    Communication interface

Bus

Memory

— 501

FIG. 16

## INTERNATIONAL SEARCH REPORT

| International application No. |
| --- |
| **PCT/CN2024/094289** |

| | |
| --- | --- |
| **A.** | **CLASSIFICATION OF SUBJECT MATTER** |

H04L 5/00(2006.01)i

According to International Patent Classification (IPC) or to both national classification and IPC

| | |
| --- | --- |
| **B.** | **FIELDS SEARCHED** |

Minimum documentation searched (classification system followed by classification symbols)

IPC: H04L5/-

Documentation searched other than minimum documentation to the extent that such documents are included in the fields searched

Electronic data base consulted during the international search (name of data base and, where practicable, search terms used)

CNABS, CNTXT, WPABSC, ENTXTC, CNKI: 唤醒, 叫醒, 超低功耗, 低功耗, LP-WUS, 时域, 符号, OOK, OFDM; WPABS, VEN, USTXT, EPTXT, WOTXT, 3GPP, IEEE: wake up, wakeup, low power, time, symbol, OOK, OFDM

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| PX | CN 117955611 A (ZTE CORP.) 30 April 2024 (2024-04-30)<br>claims 1-26 | 1-26 |
| PX | CN 117939591 A (ZTE CORP.) 26 April 2024 (2024-04-26)<br>claims 1-30 | 1-5, 17-19, 25-26 |
| X | CN 115883046 A (ZTE CORP.) 31 March 2023 (2023-03-31)<br>description, paragraphs 8-9 and 32-86 | 1-26 |
| X | CN 116073971 A (HUAWEI TECHNOLOGIES CO., LTD.) 05 May 2023 (2023-05-05)<br>claims 1-43 | 1-5, 17-19, 25-26 |

☐ Further documents are listed in the continuation of Box C.    ☑ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
| --- | --- |
| **24 June 2024** | **24 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/094289**

| Patent document cited in search report | | | Publication date (day/month/year) | Patent family member(s) | | | Publication date (day/month/year) |
|---|---|---|---|---|---|---|---|
| CN | 117955611 | A | 30 April 2024 | None | | | |
| CN | 117939591 | A | 26 April 2024 | None | | | |
| CN | 115883046 | A | 31 March 2023 | WO | 2024093402 | A1 | 10 May 2024 |
| CN | 116073971 | A | 05 May 2023 | WO | 2023078358 | A1 | 11 May 2023 |

Form PCT/ISA/210 (patent family annex) (July 2022)

**EP 4 761 164 A1**

## REFERENCES CITED IN THE DESCRIPTION

### Patent documents cited in the description

- CN 202311018885